(19) Europäisches Patentamt
European Patent Office
Office européen des brevets

(11) Veröffentlichungsnummer : **0 015 511**
**B1**

(12) **EUROPÄISCHE PATENTSCHRIFT**

(45) Veröffentlichungstag der Patentschrift : **27.07.88**

(51) Int. Cl.⁴ : **C 09 B 69/10**, D 21 H 3/38, C 09 B 23/14, C 09 B 23/04

(21) Anmeldenummer : **80101003.4**

(22) Anmeldetag : **29.02.80**

(54) **Verwendung von oligo- oder polymeren Verbindungen zum Färben von ligrinfreien Papierstoffen.**

(30) Priorität : **07.03.79 DE 2908921**

(43) Veröffentlichungstag der Anmeldung : **17.09.80 Patentblatt 80/19**

(45) Bekanntmachung des Hinweises auf die Patenterteilung : **27.07.88 Patentblatt 88/30**

(84) Benannte Vertragsstaaten : **BE CH DE FR GB IT**

(56) Entgegenhaltungen :
**US-A- 2 465 412**
**"Das Färben von Papier", B. Cornely, 1951, Seiten 27-31**
**"Handbook of Pulp and Paper Technology", K.W. Britt, 1970, Seiten 369-371**
**Hauben-Weyl "Methoden der Organischen Chemie" 1972 V/1d, Seite 231**

(73) Patentinhaber : **BASF Aktiengesellschaft**
**Carl-Bosch-Strasse 38**
**D-6700 Ludwigshafen (DE)**

(72) Erfinder : **Degen, Hans-Juergen, Dr.**
**Schillerstrasse 6**
**D-6143 Lorsch (DE)**
Erfinder : **Grychtol, Klaus, Dr.**
**Seebacher Strasse 96A**
**D-6702 Bad Duerkheim 1 (DE)**

**EP 0 015 511 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung von oligo- oder polymeren Verbindungen der allgemeinen Formel I

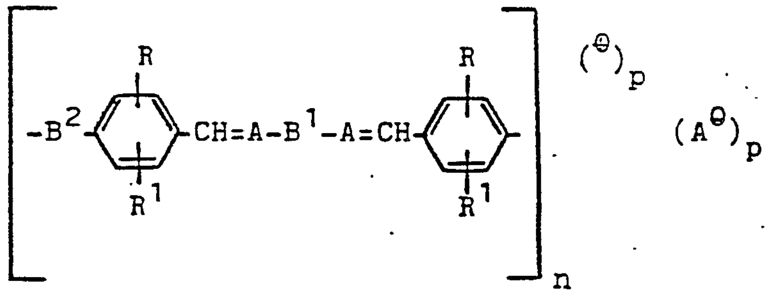

(I)

als substantive Farbstoffe zum Färben von ligninfreien Papierstoffen, wobei

A den Rest eines methylenaktiven quaternierten Stickstoffheterocyclus oder eines methylenaktiven Malonsäurederivates,

$B^1$ ein Brückenglied,

$B^2$ eine direkte Bindung oder ein von einem Di- oder Polyamin abgeleitetes Brückenglied,

n eine Zahl $> 1$,

p die Zahl der positiven Ladungen,

R Wasserstoff, Chlor, Brom, Hydroxy, $C_1$- bis $C_8$-Alkyl, Nitro, $C_1$- bis $C_8$-Alkoxy, $C_1$- bis $C_8$-Alkoxycarbonyl, Cyan, Hydroxycarbonyl, gegebenenfalls substituiertes Carbamoyl, gegebenenfalls substituiertes Amino,

$R^1$ Wasserstoff, Chlor, Hydroxy, $C_1$- bis $C_4$-Alkyl oder $C_1$- bis $C_4$-Alkoxy,

R und $R^1$ zusammen einen gegebenenfalls substituierten ankondensierten Ring oder R oder $R^1$ zusammen mit $B^2$ einen Heterocyclus und

$A^{\ominus}$ ein Anion bedeuten, wobei als Endgruppen Reste der Formeln

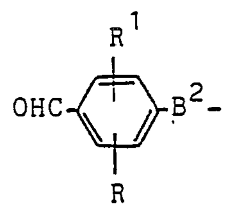 oder $-B^1-AH_2^{\oplus}A^{\ominus}$

fungieren, die gegebenenfalls noch weiter umgesetzt sein können.

Aus der US-A-2 465 412 sind schon Farbstoffe der Formel I bekannt, für die eine Verwendung in der Photographie vorgeschlagen wurde. Aus den weiteren Angaben der US-Patentschrift hinsichtlich der Subtantivität der Farbstoffe war jedoch nicht zu entnehmen, daß sie sich sehr gut für das erfindungsgemäße Färben von Papierstoffen eignen würden.

Reste $B^1$ können symmetrisch und unsymmetrisch sein. Es kommen sowohl aliphatische wie auch aromatische und Heteroatome sowie quaternierte Gruppen enthaltende Reste in Betracht, z. B. sind gegebenenfalls durch Sauerstoff-, -NH- oder Schwefel, Carbamoyl, Carbonyloxy,

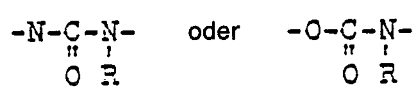

unterbrochene gegebenenfalls substituierte Alkylenreste, gegebenenfalls substituierte Phenylen-, Diphenylen- oder Naphthylenreste oder gesättigte, gegebenenfalls Heteroatome enthaltende Cycloalkylenreste zu nennen. Im einzelnen seien für $B^1$ beispielsweise aufgeführt :

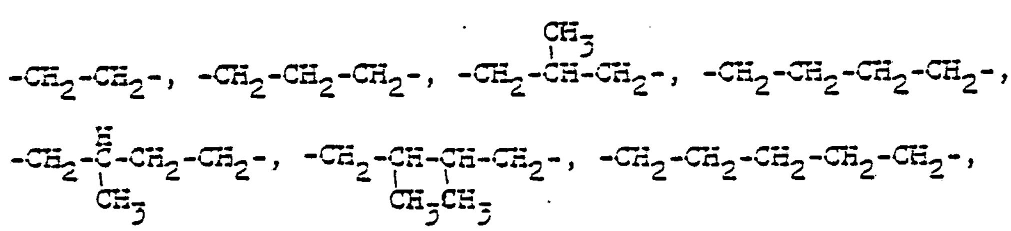

(Fortsetzung)

$-CH_2-CH_2-CH_2-CH_2-CH_2-CH_2-$, $-CH_2-CH_2-O-CH_2-CH_2-$,

$-CH_2-CH_2-S-CH_2-CH_2-$, 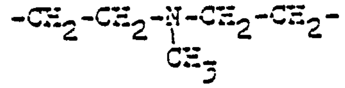, 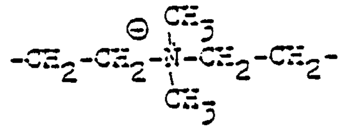,

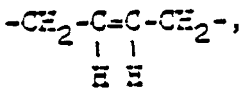, 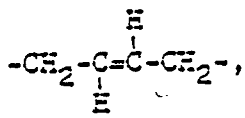, $-CH_2-CH_2-CH{=}CH-CH_2-$,

$-CH_2-C{\equiv}C-CH_2-$, 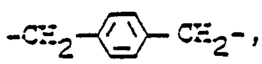, 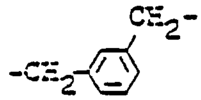, 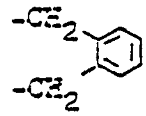,

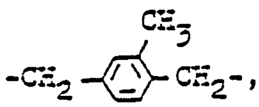, 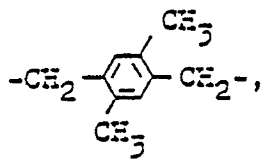, 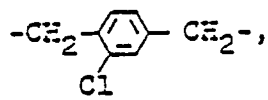,

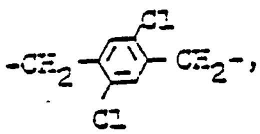, 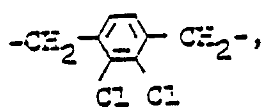, 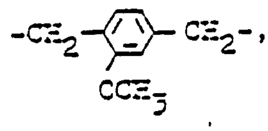,

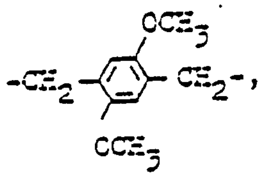, 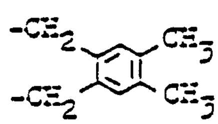; 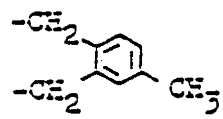,

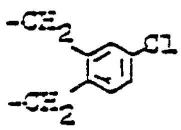, 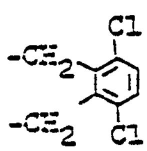, 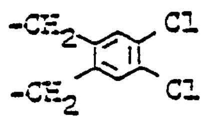, 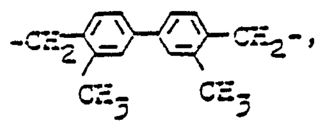,

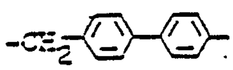, 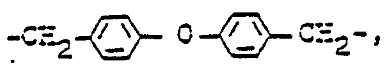, 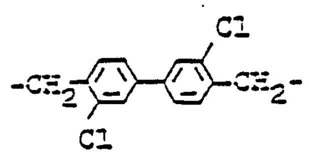,

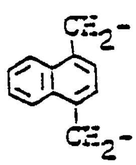, 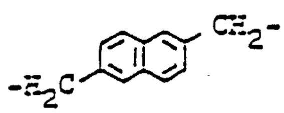 oder 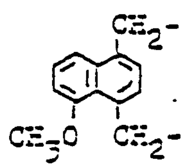

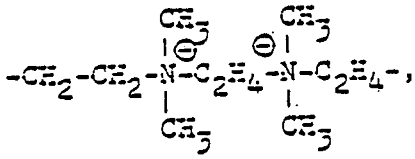, $-CH_2-CH_2-O-CH_2-CH_2-CH_2-$,

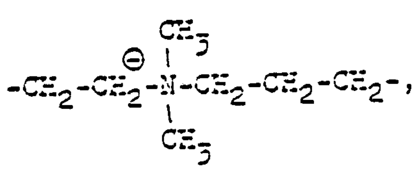, 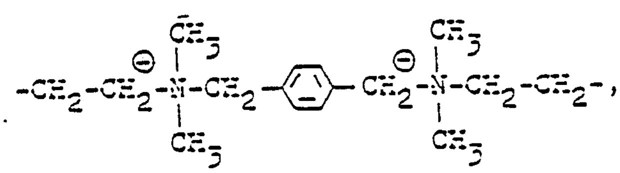,

(Fortsetzung)

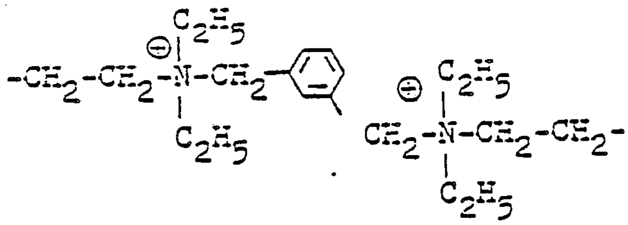

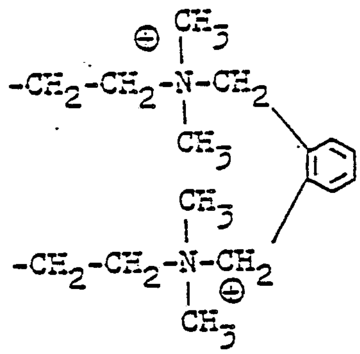
,
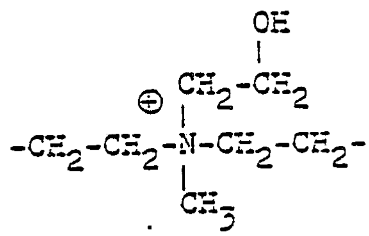
,

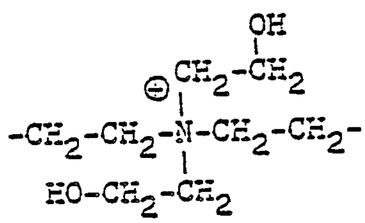
,
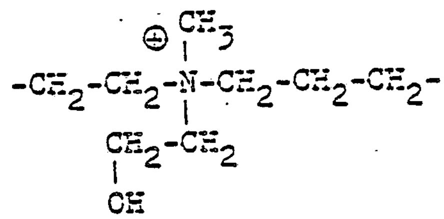
,

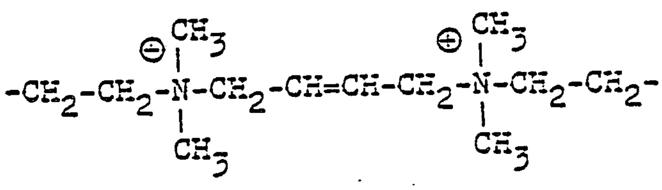
,

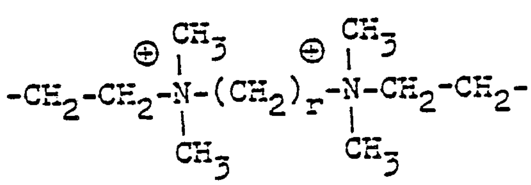
,

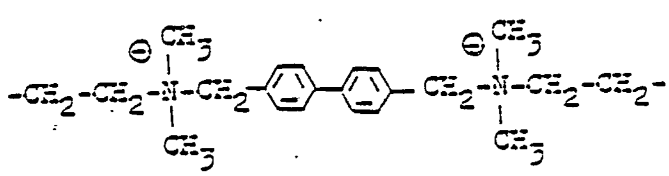
,

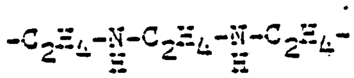
,
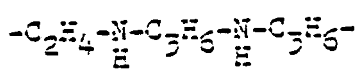
,

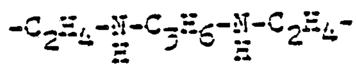
,
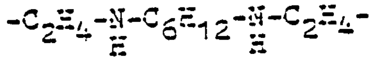
,

(Fortsetzung)

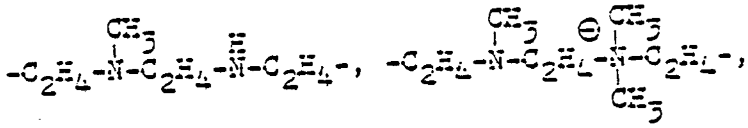

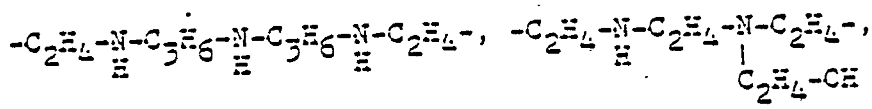

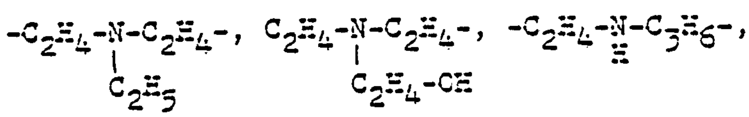

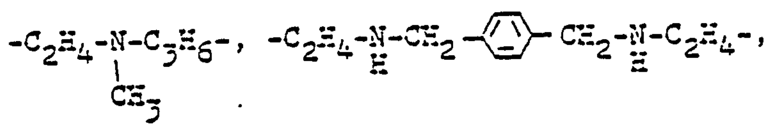

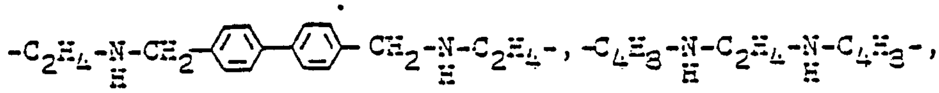

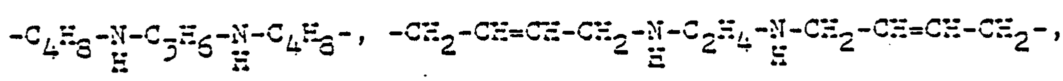

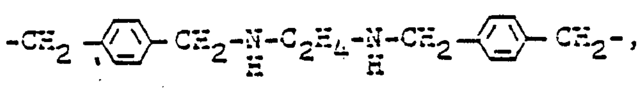

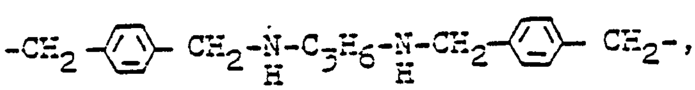

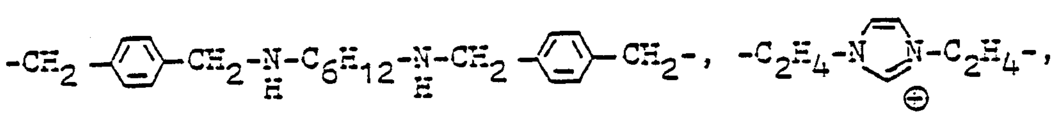

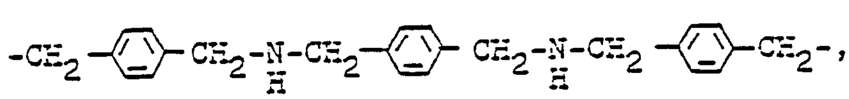

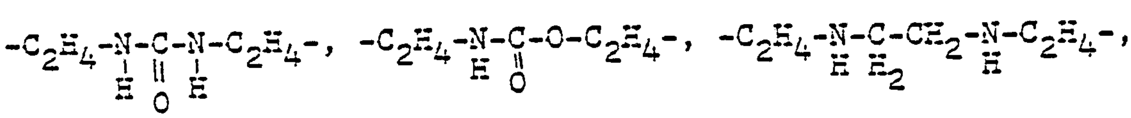

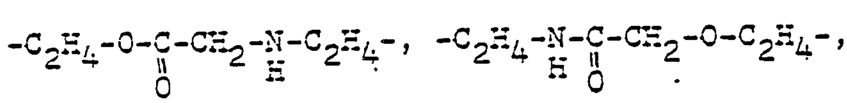

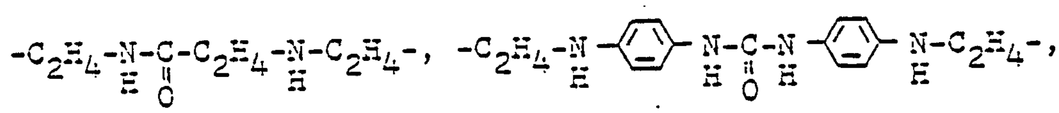

wobei r eine Zahl von 2 bis 10, vorzugsweise 2 bis 6 und insbesondere 2, 3 oder 4 ist.

Neben einer direkten Bindung kommen für $B^2$ als Brückenglieder gegebenenfalls eine quaternierte Gruppe enthaltende symmetrische und unsymmetrische Reste in Frage, die sich von einem Amin, Oligo- oder Polyamin ableiten, es seien beispielsweise genannt :

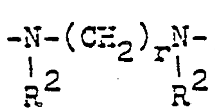, 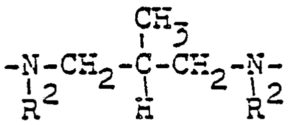, 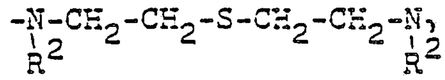

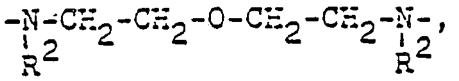, 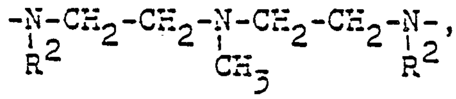,

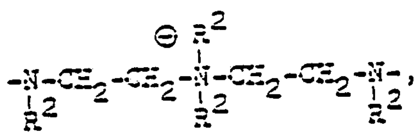, 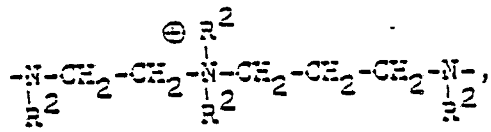,

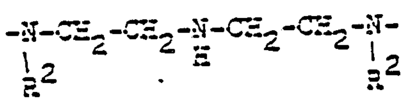, 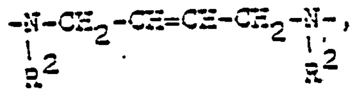,

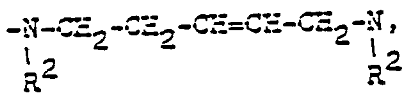, 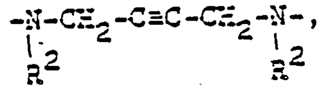,

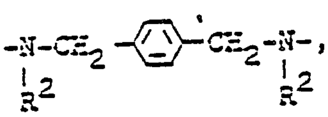, 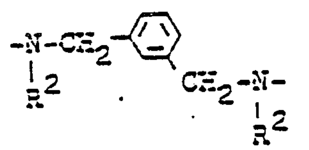, 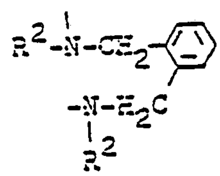,

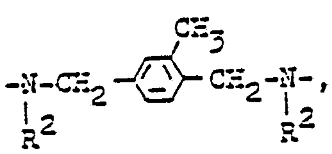, 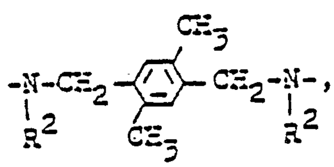, 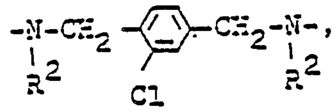,

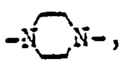, 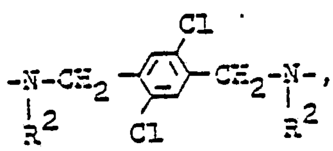, 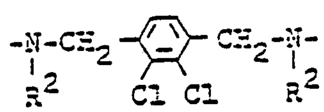,

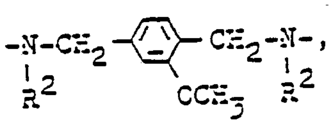, 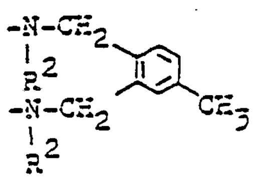, 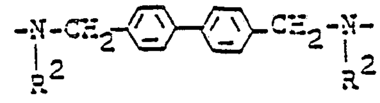

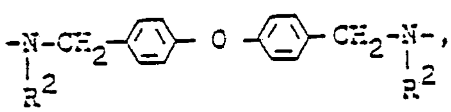, 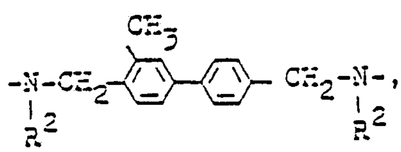,

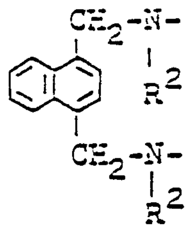 , 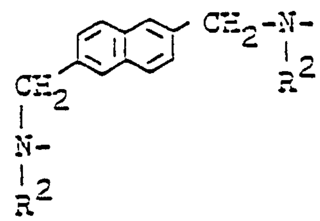 oder 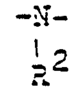

sowie Brückenglieder der allgemeinen Struktur

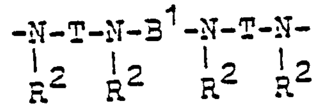

wobei

T ein geradkettiger oder verzweigter gegebenenfalls durch Hydroxy, $C_1$-bis $C_4$-Alkoxy, Chlor oder Brom substituierter Alkylenrest oder Phenylenrest,

$R^2$ Wasserstoff oder ein gegebenenfalls substituierter Alkylrest sind und $B^1$ und r die angegebene Bedeutung haben.

Die Reste A stammen von methylenaktiven Verbindungen, im einzelnen seien beispielsweise genannt :

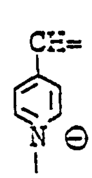 , 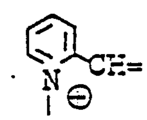 , 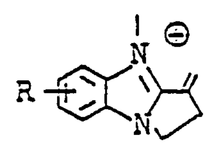 , 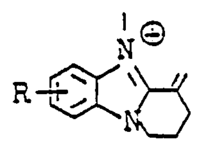 ,

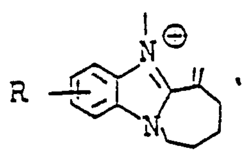 , 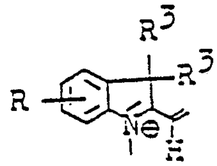 , 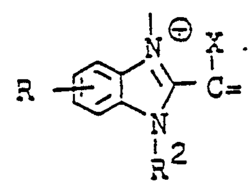 ,

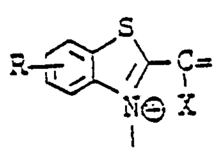 , 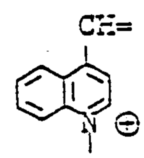 , 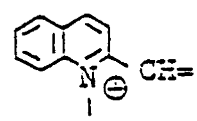 ,

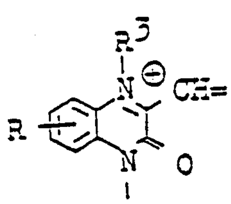 , 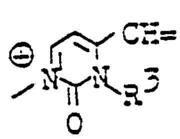 , 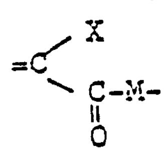 ,

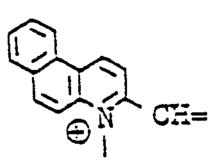

wobei

X Wasserstoff, Cyan, $C_1$- bis $C_8$-Carbamoyl, $C_1$- bis $C_8$-Alkoxycarbonyl, einen gegebenenfalls substituierten gegebenenfalls quaternierten Heterocyclus oder gegebenenfalls substituiertes $C_1$- bis $C_4$-Alkyl,

$R^3$ gegebenenfalls substituiertes Alkyl und
M ein Sauerstoffatom oder eine Iminogruppe der Struktur

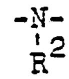

bedeuten und wobei
X und $R^2$ einen durch Heteroatome unterbrochenen Ring bilden können.

Reste $R^3$ können gleich oder verschieden sein und sind beispielsweise :
Methyl, Äthyl, Propyl, Butyl, Benzyl, Tolyl, p-Chlorbenzyl, Cyanäthyl, Hydroxyäthyl, $C_1$- bis $C_4$-Alkoxyäthyl, 2-Hydroxypropyl oder Carbamoylmethyl.

Reste X sind beispielsweise :
Methyl, Äthyl, Propyl, Butyl, Cyan, Methylaminocarbonyl, Äthylaminocarbonyl, Propylaminocarbonyl, Butylaminocarbonyl, Carbamoyl, Methoxycarbonyl, Äthoxycarbonyl, 2-Benzimidazolyl, N-Methyl-2-benzimidazolyl, N,N'-Dimethyl-2-benzimidazolium, 2-Benzthiazolyl, N-Methyl-2-benzthiazolium, 2-Benzoxazolyl oder N-Methyl-2-benzoxazolium.

Bevorzugte Reste sind z. B. für $R^3$ Methyl, Äthyl,Cyanäthyl oder Hydroxyäthyl und für X :
Cyan, Methyl, Carbamoyl, $C_1$- bis $C_4$-Carbamoyl.

Anionen $A^{\ominus}$ sind organischer oder anorganischer Natur, im einzelnen seien z. B. genannt : Fluorid, Chlorid, Bromid, Jodid, Perchlorat, Hydrogensulfat, Sulfat, Bisulfat, Aminosulfat, Nitrat, Dihydrogenphosphat, Hydrogenphosphat, Phosphat, Hydrogencarbonat, Carbonat, Methosulfat, Äthosulfat, Cyanat, Thiocyanat, Tetrachlorozinkat, Borat, Tetrafluoroborat, Acetat, Chloracetat, Cyanacetat, Hydroxyacetat, Aminoacetat, Methylaminoacetat, Di- und Trichloracetat, 2-Chlorpropionat, 2-Hydroxypropionat, Glycolat, Thioglycolat, Thioacetat, Phenoxyacetat, Trimethylacetat, Valerat, Palmitat, Acrylat, Oxalat, Malonat, Crotonat, Succinat, Zitronat, Methylenbisthioglycolat, Äthylenbisiminoacetat, Nitrilotriacetat, Fumarat, Maleat, Benzoat, Methylbenzoat, Chlorbenzoat, Dichlorbenzoat, Hydroxybenzoat, Aminobenzoat, Phthalat, Terephthalat, Indolylacetat, Chlorbenzolsulfonat, Benzolsulfonat, Toluolsulfonat, Biphenylsulfonat und Chlortoluolsulfonat.

Zur Herstellung der Verbindungen der Formel I kann man z. B. Verbindungen der Formel II

$$\left[H_2A-B^1-AH_2\right]^{m\ominus} \quad mA^{\ominus} \qquad \text{(II)}$$

mit Verbindungen der Formel III

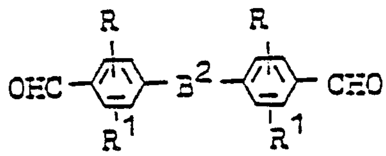

(III)

kondensieren, wobei $B^1$, $B^2$, $A^{\ominus}$, $R^1$ und R die angegebene Bedeutung haben und m eine Zahl bis zu 10, bevorzugt 1, 2, 3 oder 4 ist.

Man kann bei der Synthese auch so vorgehen, daß man Verbindungen der Formel IV

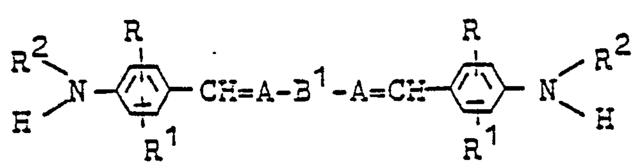

(IV)

mit Verbindungen der Formel V

$$Y-B^1-Y \qquad \text{(V)}$$

umsetzt, wobei $R^2$ die angegebene Bedeutung hat, Y den Rest einer anionisch austretenden Gruppe darstellt und die Reste $B^1$ wie auch im folgenden gleich oder verschieden sein können.

Weiterhin können Verbindungen der Formel I dargestellt werden durch Umsetzungen von Verbindungen der Formel VI

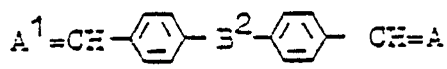 (VI)

mit Verbindungen der Formel V, wobei $A^1$ z. B.

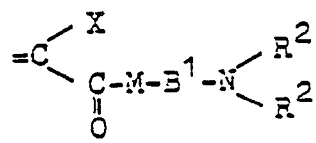

ist.

Verbindungen der Formel I können ebenfalls dargestellt werden durch Umsetzungen von Verbindungen der Formel VII

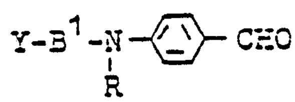 (VII)

mit Verbindungen der Formel II zu Verbindungen der Formel VIIa

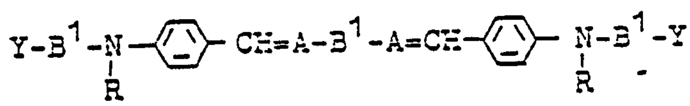 (VIIa)

und anschließender Umsetzung mit Aminen der Formel $H_2B^2$.

Zweckmäßigerweise erhitzt man die Komponenten mit oder ohne Lösungsmittel auf höhere Temperatur, beispielsweise 30 °C bis 200 °C, vorzugsweise 60 bis 150 °C, und gibt dann ein Kondensationsmittel wie Säuren oder Basen zu. Im einzelnen sind als Kondensationsmittel z. B. NaOH, KOH, MgO, $Ca(OH)_2$, primäre, sekundäre oder tertiäre Amine oder HCl, HCOOH, $CH_3COOH$, Toluolsulfonsäure, Zinkchlorid sowie Mischungen wie $NaOOCH_3/CH_3COOH$, Triäthylamin/$CH_3COOH$ zu nennen.

Als Lösungsmittel sind zweckmäßigerweise organische wassermischbare Verbindungen zu nennen z. B. Äthanol, Glykol, Glyzerin, Methylglykol, Thiodiglykol, Dimethylformamid, Dimethylsulfoxid, Acetamid, Eisessig, Acetanhydrid, Ameisensäure sowie Mischungen solcher Lösungsmittel mit Wasser, zur Einstellung der flüssigen Farbstofformulierungen eignen sich neben Alkoholen insbesondere Wasser sowie anorganische und organische Säuren und deren Mischungen mit Wasser.

Einzelheiten der Reaktionsführung können den Beispielen entnommen werden, in denen sich Angaben über Teile und Prozente, sofern nicht anders vermerkt, auf das Gewicht beziehen.

Die Verbindungen der Formel I eignen sich insbesondere zum Färben von geleimten und ungeleimten Papieren in der Masse, wobei die Affinitäten zu ligninfreien Papiermassen hoch sind. Die Farbstoffe sind größtentiels substantiv, das Abwasser nach der Färbung ist farblos bis nahezu farblos. Die erzielbaren Nuancen liegen zwischen Gelb und Blau.

Von besonderer Bedeutung sind Verbindungen der Formel VIII

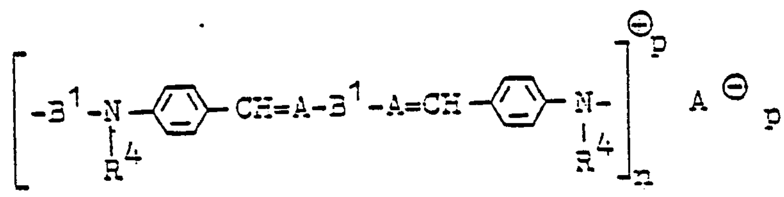 (VIII)

in der A, $B^1$, n, p, und $A^{\ominus}$ die für Formel I angegebene Bedeutung haben und $R^4C_1$- bis $C_4$-Alkyl, β-Cyanäthyl, Cyanmethyl-, β-Chloräthyl, β-Hydroxyäthyl, 2-Hydroxy-3-chlorpropyl- oder β-$C_1$- bis $C_4$-Alkoxyäthyl ist.

Die Reste $B^1$, A und $R^4$ können gleich oder verschieden sein.

Bevorzugte Reste sind z. B. für

$B^1$ : Äthylen, Propylen, Butylen, o-, m- und p-Xylylen, p-Diphenylen oder 2-Butenylen und für

A :

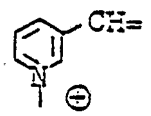, 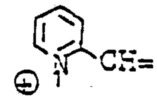, 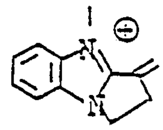, 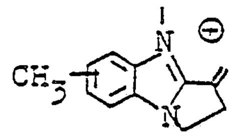

oder 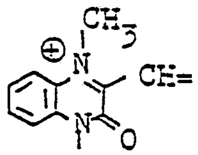.

Beispiel 1

30 Teile des Dialdehyds der Formel 1

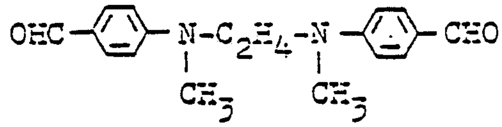

(1)

und 52 Teile der Verbindung der Formel 2

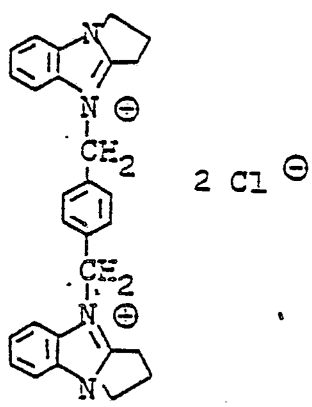

(2)

werden in 50 ml Glykol bei 70 °C mit 10 ml Pyrrolidin versetzt und 2 h bei 70 °C gehalten. Durch Zugabe von 25 ml Eisessig erhält man die Flüssigeinstellung eines oligomeren bzw. polymeren Farbstoffs der Formel 3

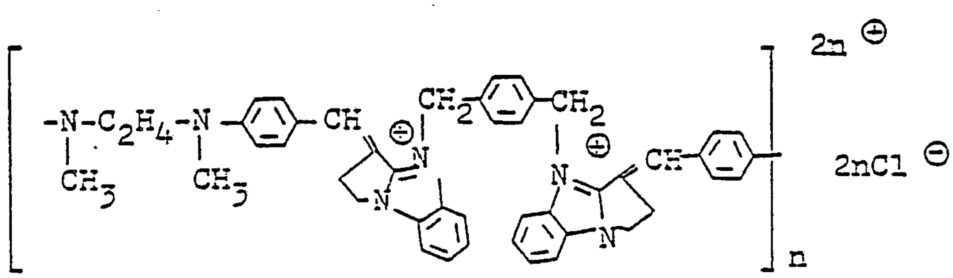

(3)

mit einer guten Löslichkeit in Wasser und hoher Lagerstabilität. Der Farbstoff färbt gebleichtes und ungebleichtes Papier in gelben Tönen. Das Abwasser ist schwach gefärbt bzw. farblos.

Beispiel 2

18 Teile der Verbindung der Formel 4

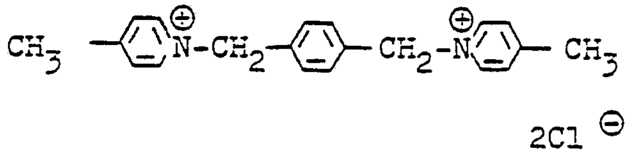

(4)

und 15 Teile des Dialdehyds der Formel 1 gelöst in 50 ml Thiodiglykol werden in Gegenwart von 5 ml Pyrrolidin für 2 Stunden auf 80 °C erhitzt. Man gibt den Ansatz auf 300 ml Wasser, stellt mit 2 n Salzsäure sauer und isoliert durch Zugabe von Kochsalz-Zinkchloridlösung und anschließendes Absaugen einen orange Farbstoff der Formel 5, der beim Färben von Papier farbloses bzw. schwach gefärbtes Abwasser liefert.

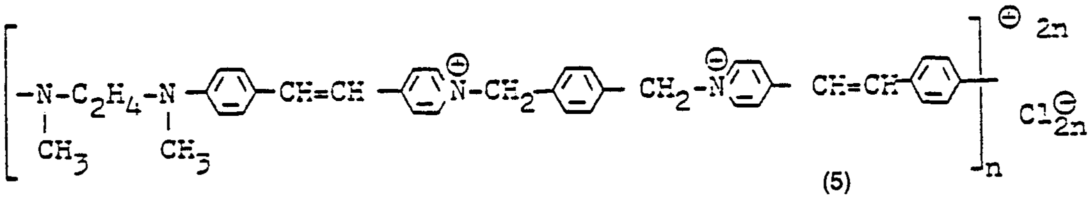

(5)

Durch analoge Umsetzung der Aldehyde der Formel

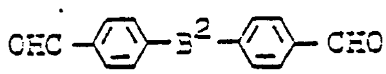

mit Verbindungen der allgemeinen Formel

$$H_2\overset{\ominus}{A}-B^1-\overset{\ominus}{A}H_2 \qquad 2A^{\ominus}$$

gelangt man zu Verbindungen der allgemeinen Formel

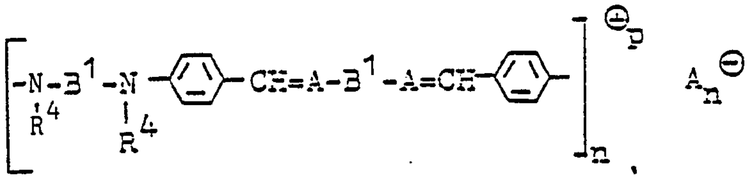

für die weitere Beispiele in der folgenden Tabelle 1 angegeben sind, in der $A^{\ominus}$ Chlorid bedeutet :

Tabelle 1

| $B^1$ | $^{\oplus}AH_2$ | $-N(R^4)-B^1-N(R^4)-$ | Farbe |
|---|---|---|---|
| 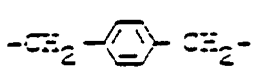 | 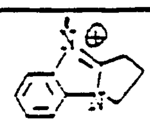 | $-N(CH_3)-C_2H_4-N(C_2H_5)-$ | gelb |
| " | " | $-N(CH_3)-CH_2-CH=CH-CH_2-N(CH_3)-$ | " |
| " | " | 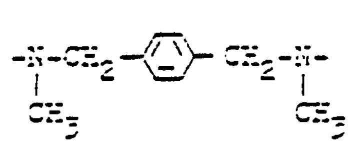 | " |

Tabelle 1 (Fortsetzung)

| $B^1$ | $^{\oplus}AH_2$ | $-\underset{R^4}{N}-B^1-\underset{R^4}{N}-$ | Farbe |
|---|---|---|---|
| " | " | $-\underset{CH_3}{N}-(CH_2)_4-\underset{CH_3}{N}-$ | " |
| " | " | $-\underset{C_2H_5}{N}-CH_2-\underset{H}{\overset{Cl}{C}}-CH_2-\underset{C_2H_5}{N}-$ | " |
| 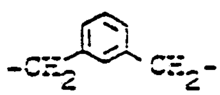 | " | $-\underset{CH_3}{N}-C_2H_4-\underset{CH_3}{N}-$ | " |
| $-C_2H_4-$ | 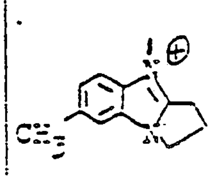 | $-\underset{C_2H_5}{N}-C_2H_4-\underset{CH_3}{N}-$ | " |
| $-C_4H_8-$ | 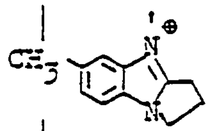 | 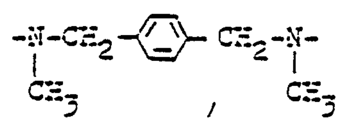 | gelb |
| $-CH_2-CH=CH-CH_2-$ | 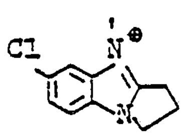 | $-\underset{CH_3}{N}-CH_2-CH=CH-CH_2-\underset{CH_3}{N}-$ | " |
| " | " | $-N-C_2H_4-N-$<br>$C_2H_4-CHC_2H_4-CH$ | orange |
| 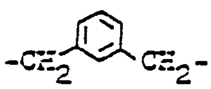 | " | 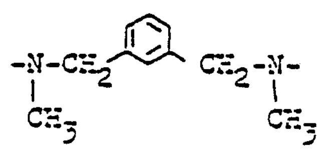 | orange |
| $-C_2H_4-$ | " | $-\underset{C_2H_5}{N}-C_2H_4-\underset{C_2H_5}{N}-$ | " |
| $-CH_2-CH=CH-CH_2-$ | " | $-\underset{CH_3}{N}-CH_2-CH=CH_2-\underset{CH_3}{N}-$ | " |

Tabelle 1 (Fortsetzung)

| $B^1$ | $\overset{\oplus}{A}H_2$ | $-N(R^4)-B^1-N(R^4)-$ | Farbe |
|---|---|---|---|
| $-CH_2-CH=CH-CH_2-$ | 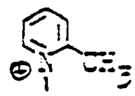 | $-N(CH_3)-CH_2-CH=CH_2-N(CH_3)-$ | gelb |
| " | " | $-N(CH_3)-C_2H_4-N(CH_3)-$ | " |
| 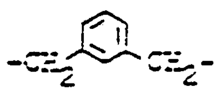 | " | " | " |
| 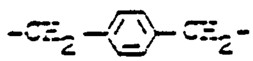 | " | " | " |
| 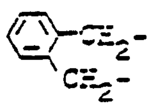 | " | " | " |
| " | " | $CN-H_2C-H_2C-N-C_2H_4-N-CH_2-CH_2-CN$ | " |
| $-C_2H_4-$ | " | $-N(CH_3)-C_2H_4-N(CH_3)-$ | " |
| $-C_4H_8-$ | " | " | " |
| $-CH_2-C\equiv C-CH_2-$ | " | " | " |
| 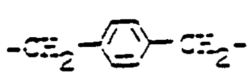 | 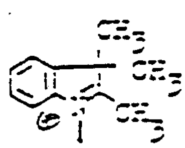 | 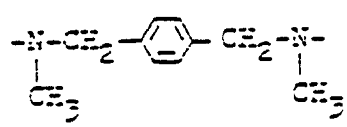 | rot |

Tabelle 1 (Fortsetzung)

| $B^1$ | $\overset{\oplus}{AH_2}$ | 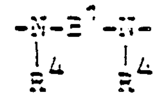 | Farbe |
|---|---|---|---|
| $-C_4H_8-$ | " | 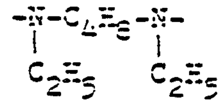 | " |
| " | 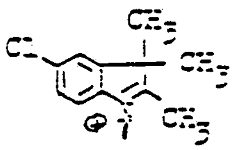 | " | " |
| " | 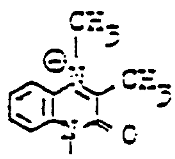 | " | blau |
| 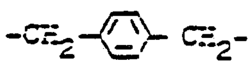 | " | 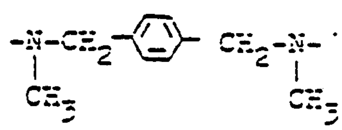 | " |
| $-C_3H_6-$ | " | " | " |
| $-C_4H_8-$ | " | " | " |
| " | " | 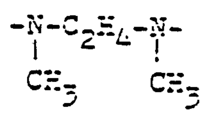 | " |
| $-C_4H_8-$ | 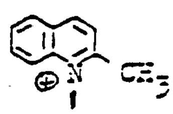 | 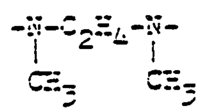 | rotviolett |
| " | 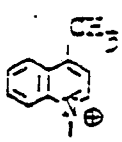 | " | " |

Es versteht sich, daß man statt der reinen Bisaldehyde der Formel

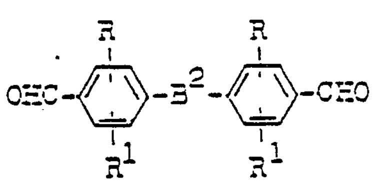

auch Gemisch aus Bisaldehyden verwenden kann, die sich bezüglich der Brückenglieder $B^2$ bzw. R und/oder $R^1$ unterscheiden. Ebenso kann man statt der reinen Verbindungen

$$H_2\overset{\oplus}{A} - B^1 - \overset{\ominus}{A}H_2 \quad 2\,A^{\ominus}$$

Gemische dieses Verbindungstyps einsetzen. Hierbei konnen sich die Reste A und/oder $B^1$ unterscheiden. Es ist auf diese Weise möglich, die Löslichkeit, die Affinität zu Papier und insbesondere den Farbton zu verändern. In der folgenden Tabelle 2 wird exemplarisch für alle vorangegangenen und folgenden Beispiele gezeigt, daß durch die angeführte Variation der Reaktionspartner eine kontinuierliche Änderung des Farbtons erzielt werden kann, wie dieses beispielsweise auch durch Mischen der beiden auf einheitlichen Ausgangsverbindungen $H_2A$-$B^1$-$AH_2$ und

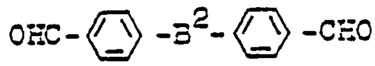

aufgebauten Polymeren gescheben könnte. Es liegt nahe, als Struktur für die so synthetisierten Produkte statistische Mischpolymere anzunehmen, obwohl nicht ausgeschlossen werden kann, daß sich unter den Reaktionsbedingungen auch einheitliche Polymere bilden können.

Analog der Vorschrift für Beispiel 1 werden statt 52 Teilen der Verbindung 2 die in der nachstehenden Tabelle 2 angeführten Mengen an Verbindung der Formel 2 und Verbindung der Formel 4 eingesetzt.

Tabelle 2

Mengen an Verbindungen der Formel

| 2 | 4 | Farbe |
|---|---|---|
| 46,8 | 3,6 | gelb-orange |
| 41,6 | 7,2 | gelb-orange |
| 36,4 | 10,8 | orange |
| 31,2 | 14,4 | orange |
| 26,0 | 18,0 | orange |
| 20,8 | 21,6 | orange |
| 15,6 | 25,2 | orange |
| 10,4 | 28,8 | orange |
| 5,2 | 32,4 | orange |

Mit zunehmendem Anteil an Verbindung der Formel 4 verschiebt sich der Farbton von einem stark gelbstichigen Orange nach einem rotstichigen Orange.

Als Endgruppen für die Farbstoffe der Formel 3 und 5 sowie für alle anderen beanspruchten Farbstoffe kommen synthesebedingt die Reste

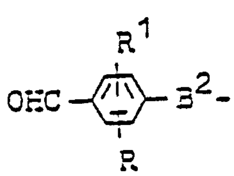 oder $B^1$-$AH_2{}^{\oplus}A^{\ominus}$

in Betracht, deren reaktive Zentren gegebenenfalls noch weiter umgesetzt sein können. Als Reaktionspartner für die freie Aldehydgruppe der Endgruppe

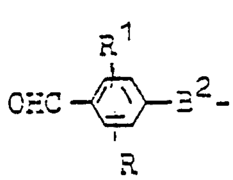

sind prinzipiell Systeme geeignet, die mit Aldehydfunktion zur Reaktion gebracht werden können, insbesondere kondensationsfähige methylenaktive Komponenten, wie z. B. Malodinitril. Als Reaktionspartner für die freien Reste $—B^1—AH_2^{\oplus}A^{\ominus}$ seien in erster Linie Aldehyde genannt, z. B. Benzaldehyd. Von besonderer Bedeutung ist in diesem Zusammenhang die Möglichkeit einer Nuancierung durch solche methylenaktiven Verbindungen, die bei Kondensation mit p-Aminobenzaldehyden farbige Verbindungen liefert und die im Farbton nicht mit dem zu nuancierenden Farbstoff übereinstimmen.

Versetzt man z. B. bei der Synthese des Farbstoffs aus Beispiel I vor oder nach der Zugabe von Eisessig das Reaktionsgemich mit 3 g N-Methyl-γ-picoliniummethosulfat, so gelangt man zu einem Farbstoff, dessen Farbton gegenüber dem Farbstoff aus Beispiel 1 nach orange verschoben ist.

In analoger Weise können auch carbonylhaltige Verbindungen zur Nuancierung verwendet werden, sofern sie andersfarbige Kondensationsprodukte als der zu nuancierende Farbstoff liefern. So erhält man z. B. durch Zugabe von 3 g p-Dimethylaminobenzaldehyd zu der Reaktionsmischung aus Beispiel 1 bei 60 °C vor der Zugabe von Eisessig eine Farbtonverschiebung nach rot gegenüber dem Farbstoff aus Beispiel 1.

Der Polymerisationsgrad der Verbindungen wird weitgehend durch die Reaktionsführung, insbesondere durch die Reaktionszeit und die Reaktionstemperatur beeinflußt. Die Substantivität der Farbstoffe auf Papier nimmt mit sinkender Reaktionszeit und Reaktionstemperatur geringfügig ab, gegenläufig dazu erhält man eine Steigerung in der Brillanz der Färbungen. Die in der folgenden Tabelle 3 aufgeführten Variationen der Temperatur sind, sofern nicht anders vermerkt, exemplarisch für alle angeführten Beispiele.

Tabelle 3

Mengen an eingesetzten Chemikalien wie Beispiel 1

| Temp. (°C) | Zeit (h) |
|---|---|
| 40 | 10 |
| 50 | 7 |
| 50 | 3 |
| 50 | 1 |
| 60 | 10 |
| 60 | 2 |
| 60 | 1 |
| 70 | 5 |
| 70 | 2 |
| 70 | 1 |
| 70 | 1/2 |
| 70 | 1/4 |
| 80 | 1 |
| 90 | 2 |
| 100 | 1/2 |
| 110 | 2 |
| 110 | 1 |
| 120 | 1 |
| 130 | 1/2 |
| 140 | 2 |
| 140 | 1 |
| 140 | 1/2 |
| 140 | 1/4 |
| 150 | 1/2 |
| 160 | 1/2 |
| 170 | 1/2 |

Es wird bei dieser Versuchsreihe beobachtet, daß bei ansonsten gleichen Reaktionsbedingungen bei einer Steigerung der Reaktionszeit oder einer Erhöhung der Reaktionstemperatur insbesondere bei Temperaturen >110 °C eine deutliche Abnahme der Brillanz stattfindet. Ebenso wird es zunehmend schwieriger konzentrierte Flüssigeinstellungen mit ausreichender Viskosität zu erhalten. Die Löslichkeiten in Wasser bleiben von diesen Operationen weitgehend unbeeinflußt.

Weiterhin von besonderer Bedeutung sind Verbindungen der Formel IX

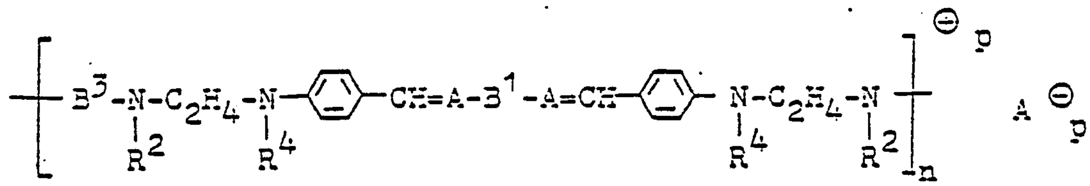

(IX)

In der A, $B^1$, $R^2$, $R^4$, n, p und $A^{\ominus}$ die angegebene Bedeutung haben, die Reste A, $R^2$ und $R^4$ gleich oder verschieden sein können und $B^3$ die in der nachfolgenden Tabelle 4 angegebenen Bedeutungen hat.

Bevorzugte Reste sind z. B. für :

$R^4$, A, $B^1$ die bei Formel VIII erwähnten Reste

$B^3$ Äthylen, Propylen, Butylen, $-C_2H_4-\underset{H}{N}-C_2H_4-$, $-C_3H_6-\underset{H}{N}-C_3H_6-$, Hexamethylen,

$R^2$ Wasserstoff, Methyl, Äthyl und Hydroxyäthyl.

Beispiel 3

42 Teile einer Verbindung der Formel 6

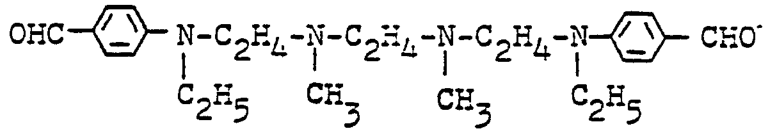 und

(6)

18 Teile einer Verbindung der Formel 4 werden in 50 ml Thiodiglykol bei 80 °C mit 5 ml Pyrrolidin versetzt und 2 h bei 80 °C gehalten. Durch Zugabe von 25 ml Eisessig und 5 ml Wasser erhält man die Flüssigeinstellung eines oligomeren bzw. polymeren Farbstoff der Formel 7

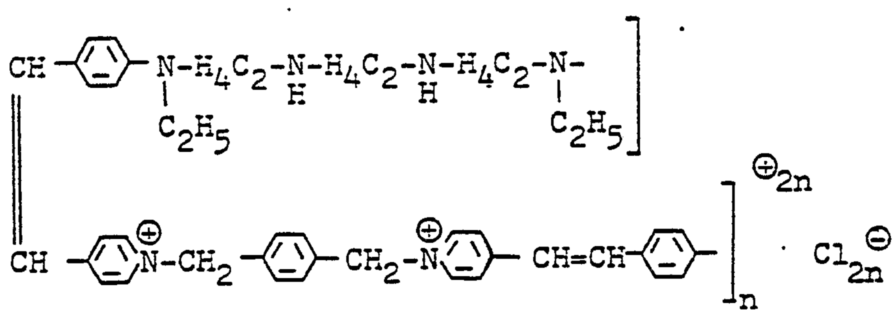

(7)

Der Farbstoff färbt gebleichte und ungebleichte Zellstoffe in orange Tönen bei sehr guten Abwasserwerten.

In analoger Weise erhält man durch Umsetzung von Bisaldehyden des allgemeinen Typs

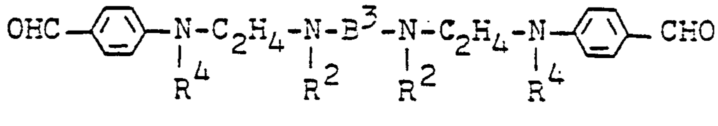

mit Verbindungen der allgemeinen Struktur

$$H_2\overset{\ominus}{A}-B^1-\overset{\ominus}{A}H_2 \quad 2\,A^{\ominus}$$

Farbstoffe der allgemeinen Struktur IX.

In Tabelle 4 sind weitere Beispiele für Farbstoffe der Struktur IX angeführt, wobei $A^{\ominus}$ Chlorid bedeutet.

Tabelle 4

| $R^3$ | $^{\oplus}AR_2$ | $R^1$ | $R^2$ | $R^4$ | Farbe |
|---|---|---|---|---|---|
| $-C_2H_4-$ | 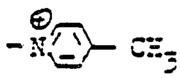 | $-C_2H_4-$ | H | $CH_3$ | orange |
| " | " | " | $CH_3$ | " | " |
| " | " | " | " | $C_2H_5$ | " |
| " | " | " | " | " | " |
| $-C_3H_6-$ | " | " | " | " | " |
| $-C_4H_8-$ | " | " | " | " | " |
| $-C_5H_{10}-$ | " | " | " | " | " |
| $-C_6H_{12}-$ | " | " | " | " | " |
| $-C_2H_4-$ | " | 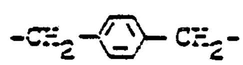 | " | " | " |
| $-C_3H_6-$ | " | " | " | " | " |
| $-C_4H_8-$ | " | " | " | " | " |
| $-C_5H_{10}-$ | " | " | " | $CH_3$ | " |
| $-C_6H_{12}-$ | 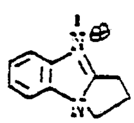 | 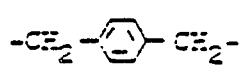 | H | $CH_3$ | gelb |
| " | " | " | $CH_3$ | $C_2H_5$ | " |
| " | " | 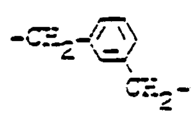 | " | " | " |
| $-C_2H_4-$ | " | 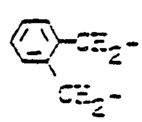 | " | " | " |
| " | 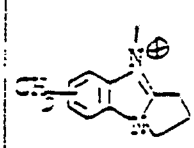 | $-C_4H_8-$ | " | " | " |
| " | " | $-CH_2-CH=CH-CH_2-$ | " | " | " |

Tabelle 4 (Fortsetzung)

| $B^3$ | $^{\oplus}AH_2$ | $B^1$ | $R^2$ | $R^4$ | Farbe |
|---|---|---|---|---|---|
| $-C_4H_8-$ | " | $-CH_2-C\equiv C-CH_2-$ | " | " | " |
| $-C_2H_4-$ | " | $-C_5H_{10}-$ | " | " | " |
| $-C_2H_4-N(H)-C_2H_4-$ | " | $-C_2H_4-$ | " | " | " |
| $-C_2H_4-N(CH_3)-C_2H_4-$ | " | " | $CH_3$ | " | " |
| $-C_2H_4-N(CH_3)-C_2H_4-$ | 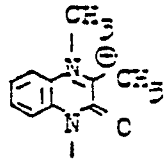 | " | H | " | blau |
| $-C_2H_4-N(H)-C_3H_6-$ | 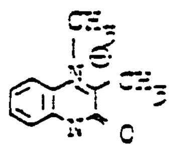 | $-C_2H_4-$ | H | $CH_3$ | blau |
| $C_2H_4-N(H)-C_2H_4-N(H)-C_2H_4-$ | " | " | " | $C_2H_5$ | " |
| $-C_2H_4-N(H)-C_2H_4-$ | " | " | " | " | " |
| $-C_2H_4-O-C_2H_4-$ | 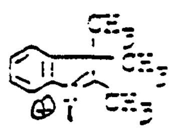 | $-CH_2-$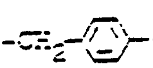$-CH_2-$ | " | " | rot |
| $-CH_2-$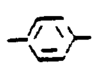$-CH_2-$ | " | $-CH_2-CH=CH-CH_2-$ | " | " | " |

Weiterhin von besonderer Bedeutung sind Verbindungen der Struktur X

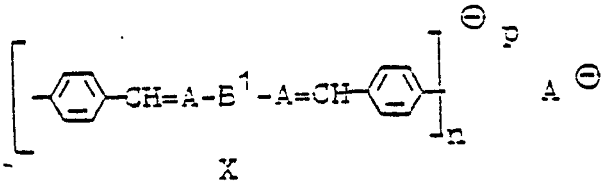

X

wobei A, $B^1$, p, n und $A^{\ominus}$ die angegebene Bedeutung haben und die Reste A gleich oder verschieden sein können.

Bevorzugte Reste $B^1$ sind z. B. Äthylen, Propylen, Butylen, o-, m- und p-Xylylen,

$-C_2H_4-NH-C_2H_4-NH-C_2H_4-$, 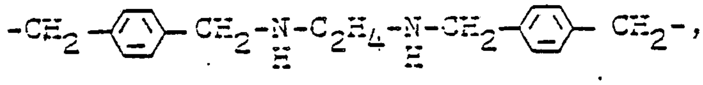

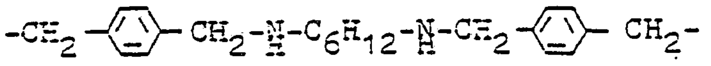 und

$-CH_2-CH=CH-CH_2-NH-C_2H_4-NH-CH_2-CH=CH-CH_2-$

Beispiel 4

21 Teile Diphenyldialdehyd und 52 Teile einer Verbindung der Formel 9 werden in 50 ml Glykol bei 80 °C mit 5 ml Pyrrolidin versetzt und 2 h bei 80 °C gehalten. Man gießt auf 500 ml Wasser, versetzt mit gesättigter Kochsalzlösung saugt ab und trocknet. Man erhält in guter Ausbeute einen gelben Farbstoff der Formel

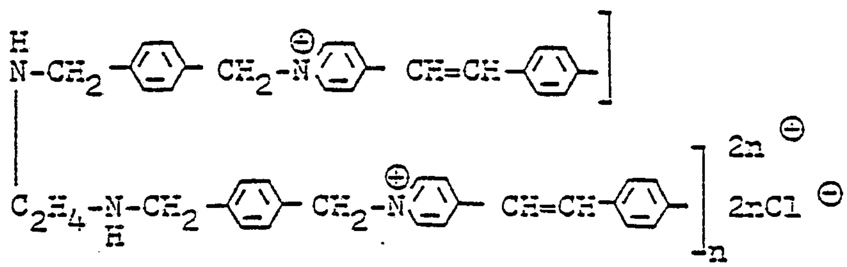

Der Farbstoff ist zum Färben von Papier geeignet. Das Abwasser ist farblos bzw. schwach gelb gefärbt.

In analoger Weise erhält man durch Umsetzung von Diphenylaldehyd mit Verbindungen der allgemeinen Formel

$$H_2\overset{\oplus}{A}-B^1-\overset{\oplus}{A}H_2$$

Farbstoffe der allgemeinen Formel X.

In Tabelle 5 sind Beispiele für weitere Farbstoffe der Struktur X angeführt.

Tabelle 5

| $B^1$ | $\overset{\oplus}{A}H_2$ | Farbe |
|---|---|---|
| $-C_2H_4-$ | 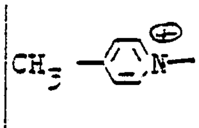 | gelb |
| $-C_4H_8-$ | " | " |
| $-C_2H_4-NH-C_2H_4-NH-C_2H_4-$ | " | " |
| 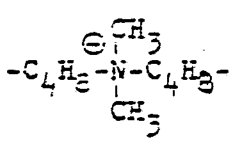 | " | " |

Tabelle 5 (Fortsetzung)

| $B^1$ | $\overset{\ominus}{A}H_2$ | Farbe |
|---|---|---|
| $-C_4H_8-\underset{H}{N}-C_3H_6-\underset{H}{N}-C_4H_8-$ | " | " |
| $-C_2H_4-\underset{H}{N}-C_3H_6-\underset{H}{N}-C_2H_4-$ | " | " |
| 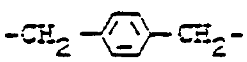 | " | " |
| 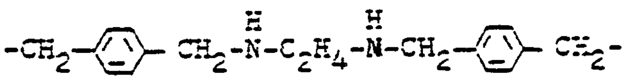 | " | " |
| 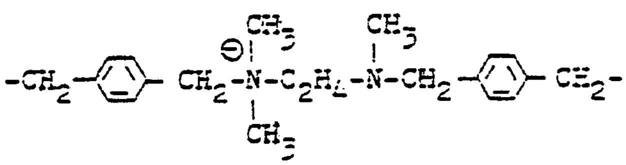 | " | " |
| " | 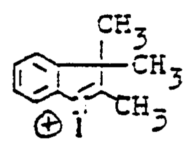 | gelb-orange |
| 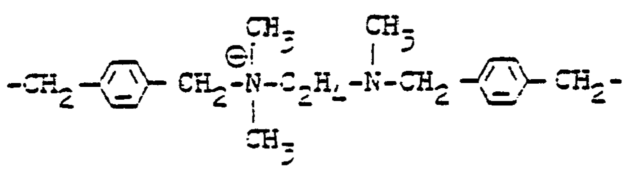 | 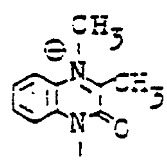 | rot |
| 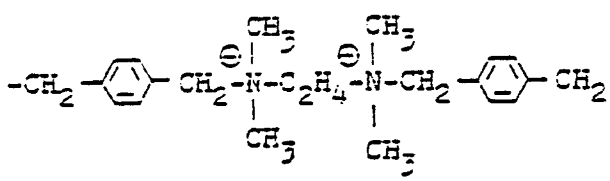 | " | " |
| $-C_4H_8-$ | " | " |

Ebenfalls von besonderer Bedeutung sind Verbindungen der Formel XI

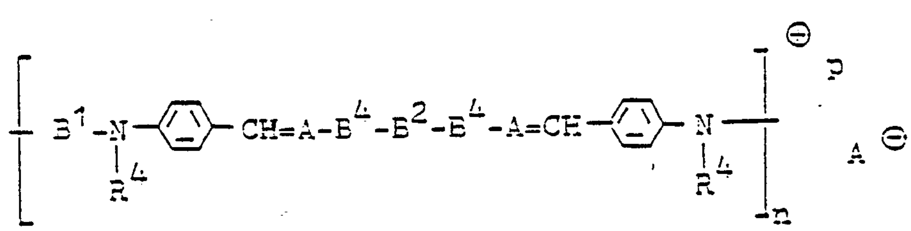

(XI)

in der A, $B^2$, $B^1$, n, p und $A^{\ominus}$ die angegebene Bedeutung haben, A und $R^4$ gleich oder verschieden sein können und $B^4$ im Rahmen der allgemeinen Definition für $B^1$ ein Brückenglied, das keine positive Ladung trägt und nicht durch ein Heteroatom unterbrochen ist, bedeutet.

Bevorzugte Reste sind z. B. für

$B^1$ und $B^4$ Äthylen, Propylen, Butylen, o-, m- und p-Xylylen oder 2-Butenylen,

$R^4$ Äthyl, Methyl,

$B^2$ $-HN-C_3H_6-NH-$, $-HN-C_2H_4-NH-$ und $-HN-C_6H_{12}-NH-$.

Beispiel 5

33 Teile eines Dialdehyds der Formel 8

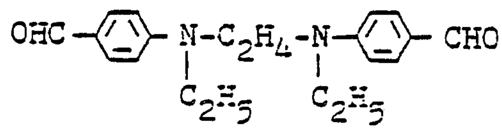 und (8)

52 Teile einer Verbindung der Formel 9

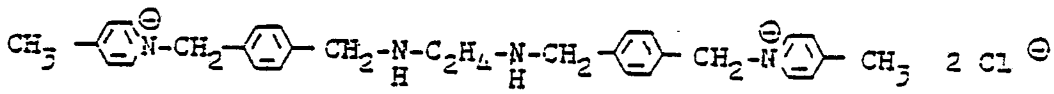 (9)

werden in 50 ml Glykol für 2 h in Gegenwart von 5 ml Pyrrolidin auf 90 °C erhitzt. Durch Zugabe von 50 ml Eisessig erhält man die Flüssigeinstellung eines roten Farbstoffs der Struktur 10.

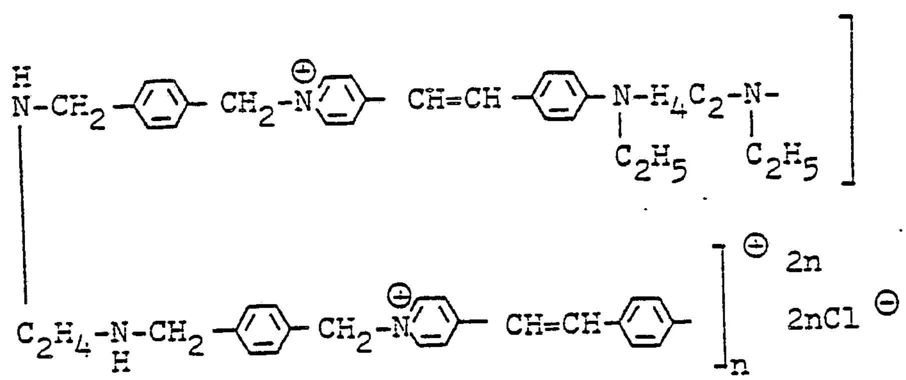 (10)

Der Farbstoff ist in Wasser sehr gut löslich und färbt gebleichte und ungebleichte Zellstoffe in orange Tönen. Die Abwasser sind farblos bzw. schwach gefärbt.

In analoger Weise erhält man durch Umsetzung von Bisaldehyden der allgemeinen Formel

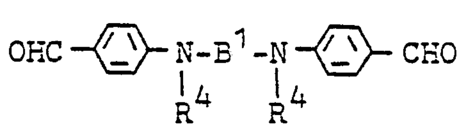

mit Verbindungen der allgemeinen Formel

$$H_2\overset{\oplus}{A}-B^4-B^2-B^4-\overset{\oplus}{A}H_2 \qquad 2\ Cl^{\ominus}$$

Farbstoffe der allgemeinen Struktur XI.

In Tabelle 4 sind weitere Beispiele für Farbstoffe der Struktur XI angeführt, wobei $A^{\ominus}$ Chlorid bedeutet.

Tabelle 6

| $B^1$ | $B^4$ | $B^2$ | $^{\oplus}AH_2$ | $R^4$ | Farbe |
|---|---|---|---|---|---|
| $-C_2H_4-$ | $-C_2H_4-$ | $-HN-C_2H_4-NH-$ | 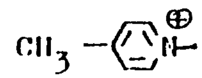 | $CH_3$ | rot |
| " | $-C_4H_8-$ | " | " | $C_2H_5$ | " |
| 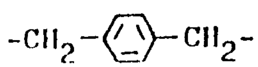 | " | " | " | " | " |
| 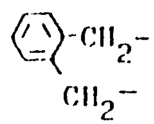 | " | " | " | " | " |
| $-C_4H_8-$ | " | $-HN-C_3H_6-NH-$ | " | " | " |
| $-C_4H_8-$ | $-CH_2-CH=CH-CH_2-$ | " | " | " | " |
| " | " | " | 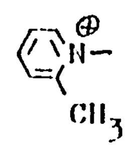 | " | orange |

(Fortsetzung)

| $R^1$ | $R^4$ | $R^2$ | $^{\oplus}AH_2$ | $R_4$ | Farbe |
|---|---|---|---|---|---|
| 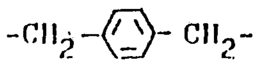 | $-CH_2-CH=CH-CH_2-$ | $-HN-C_3H_6-NH-$ | 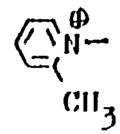 | $C_2H_5$ | orange |
| " | " | $-HN-C_6H_{12}-NH-$ | 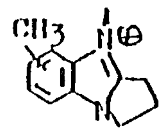 | " | gelb |
| " | 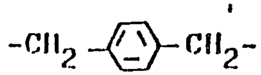 | " | " | " | " |
| " | " | $-HN-C_2H_4-NH-$ | 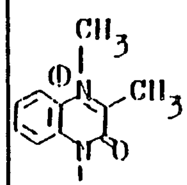 | $CH_3$ | blau |
| " | " | " | " | $C_2H_5$ | " |
| " | $-CH_2-CH=CH-CH_2-$ | " | " | " | " |
| " | 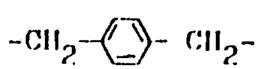 | $-HN-C_2H_4-\overset{\oplus}{N}(CH_3)_2-C_2H_4-NH-$ | " | " | " |

Weiterhin sind von besonderer Bedeutung Verbindungen der Formel XII

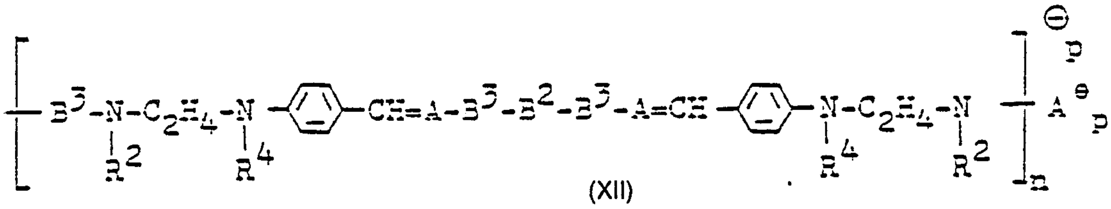

(XII)

wobei $B^3$, $B^2$, $R^2$, $R^4$, A, p, $A^{\ominus}$ und n die angegebene Bedeutung haben und $B^3$, $R^2$, $R^4$ und A gleich oder verschieden sein können.

Bevorzugte Reste sind z. B. für

$R^2$, $R^4$, A die bevorzugten Reste aus Formel IX

$B^3$ die bevorzugten Reste $B^1$ aus Formel VIII und für

$B^2$ diejenigen aus Beispiel XI.

Beispiel 6

42 Teile eines Dialdehyds der Formel 6 und

52 Teile einer Verbindung der Formel 9 werden in

50 ml Methylglykol für 2 h in Gegenwart von 10 ml Pyrrolidin auf 80 °C erhitzt. Durch Zugabe von 70 ml Eisessig erhält man eine Flüssigeinstellung eines Farbstoffs der Formel

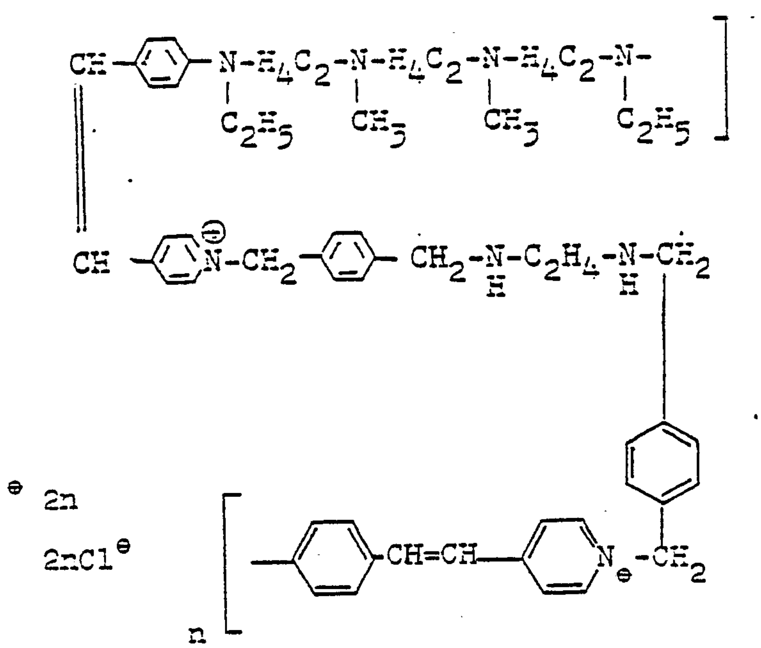

Der Farbstoff ist zum Färben von Papier geeignet. Die Färbung des Abwassers ist gering. In analoger Weise erhält man durch Umsetzung von Bisaldehyden der allgemeinen Formel

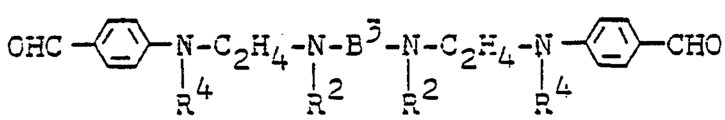

mit Verbindungen der allgemeinen Formel

$$H_2\overset{\ominus}{A}-B^3-B^2-B^3-\overset{\ominus}{A}H_2 \qquad 2Cl^{\ominus}$$

Farbstoffe der allgemeinen Formel XII.

In der folgenden Tabelle 7 sind weitere Beispiele für Farbstoffe der Struktur XII angeführt.

Tabelle 7

| $R^3$ | $R^2$ | $\overset{\oplus}{A}H_2$ | $R^2$ | $R^4$ | Farbe |
|---|---|---|---|---|---|
| $-C_2H_4-$ | $-HN-C_2H_4-NH-$ | $CH_3$ — 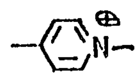 | $CH_3$ | $CH_3$ | rot |
| " | " | " | " | $C_2H_5$ | " |
| $-CH_2-$ 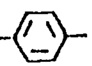 $CH_2-$ | " | " | " | " | " |
| " | " | " | " | " | " |
| " | " | " | " | " | " |
| $-C_4H_8-$ | $-HN-C_3H_6-NH-$ | " | " | " | orange |
| " | $-C_2H_4-$ | " | " | " | orange |
| $-CH_2-$ 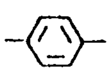 $CH_2-$ | $-HN-C_3H_6-NH-$ | " | " | " | " |

(Fortsetzung)

| $B^3$ | $B^2$ | $^{\oplus}AH_2$ | $R^2$ | $R^4$ | Farbe |
|---|---|---|---|---|---|
| 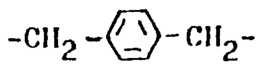 | $-HN-C_3H_6-NH-$ | 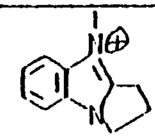 | $C_2H_5$ | $C_2H_5$ | gelb |
| " | " | 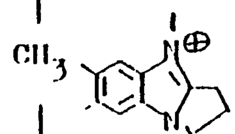 | " | " | " |
| " | " | " | " | $CH_3$ | " |
| " | " | " | $CH_3$ | " | " |
| " | " | 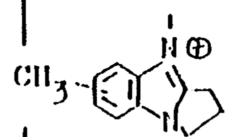 | " | " | " |
| $-CH_2-CH=CH-CH_2-$ | " | " | $C_2H_5$ | " | " |
| 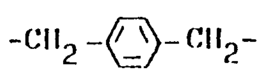 | $-HN-C_2H_4-NH-$ | 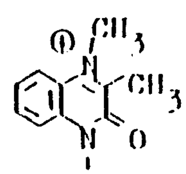 | " | $C_2H_5$ | blau |
| $-C_3H_6-$ | " | " | " | $CH_3$ | " |
| $-C_4H_8-$ | $-HN-C_3H_6-NH-$ | " | " | " | " |

Ebenfalls von besonderer Bedeutung sind Verbindungen der Formel XIII

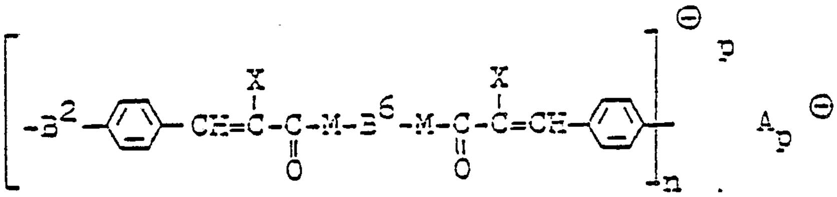

(XIII)

wobei X, M, p, n und $A^{\ominus}$ die angegebene Bedeutung haben und die Reste M und X gleich oder verschieden sein können.

Reste $B^2$ sind im Rahmen der allgemeinen Definition solche, die sich von einem Triamin oder höherfunktionellen Amin ableiten, wobei eine oder mehrere Aminogruppen quaterniert sein können. Reste $B^6$ sind im Rahmen der allgemeinen Definition für $B^1$ solche die keine quartäre Ladung tragen.

Bevorzugte Reste sind z. B. für

$B^6$ Äthylen, Propylen, p-Phenylen, Butylen,

M Sauerstoff

$B^2$

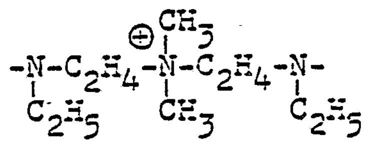 , 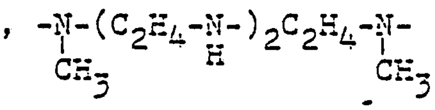 ,

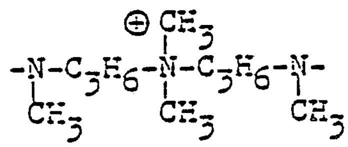 , 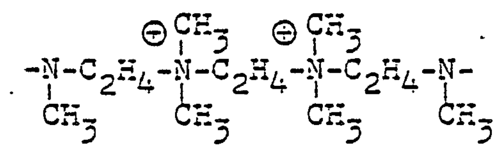

oder 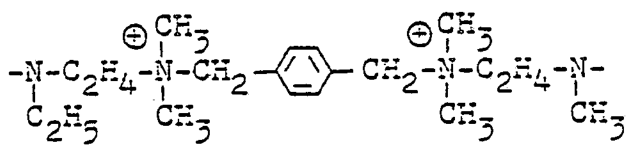

und für

X —CN.

Beispiel 7

Eine Mischung aus 17 Teilen Cyanessigsäure und 37 Teilen Acetanhydrid wird 1 h auf 70 °C erhitzt, auf 40 °C abgekühlt und mit 18 Teilen einer Verbindung der Formel

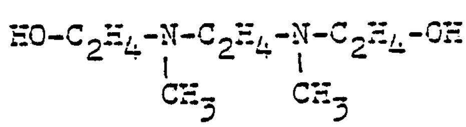

versetzt. Es wird 1 h bei 40 °C nachgerührt. Anschließend versetzt man das Reaktionsgemisch mit 76 Teilen eines Bisaldehyds der Formel

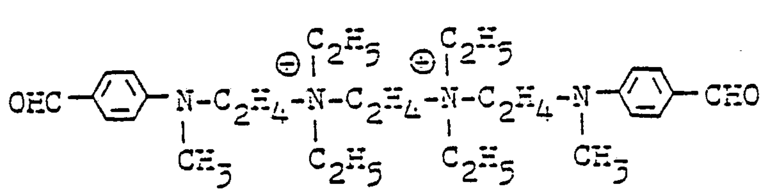

und erhitzt für 6 h auf 80 °C. Durch Zugabe von 100 Teilen Eisessig erhält man die Flüssigeinstellung eines gelben Farbstoffs der Formel

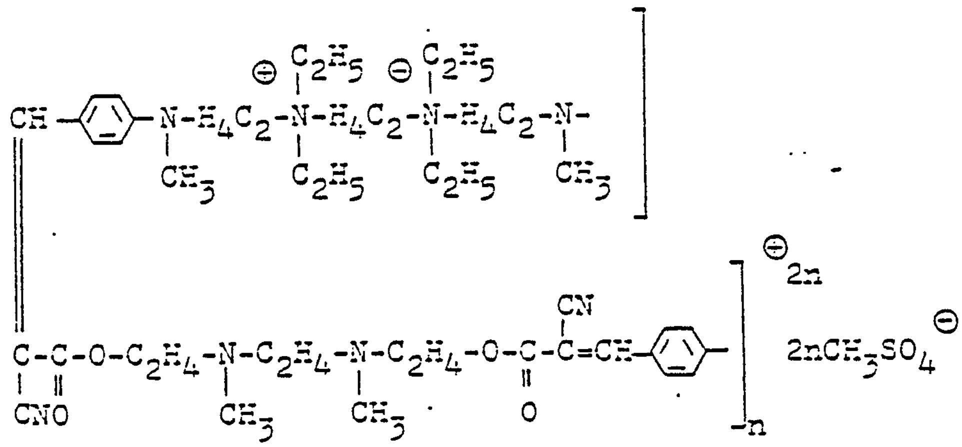

Der Farbstoff ist zum Färben von Papier geeignet. In analoger Weise erhält man durch Umsetzung von Verbindungen der allgemeinen Formel

E-$B^6$-E

wobei E sowohl OH als auch $\overset{H}{N}R^2$ bedeuten kann und wobei $R^2$ die angegebene Bedeutung hat, mit gemischten Anhydriden der Formel

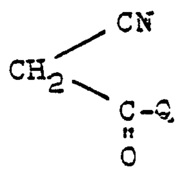

wobei Q den Rest einer organischen oder anorganischen Säure bedeutet, vorzugsweise der Essigsäure oder der Salzsäure, und anschließende Kondensation mit einem Dialdehyd der allgemeinen Formel

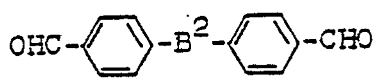

einen Farbstoff der allgemeinen Formel XIII.

In der folgenden Tabelle 8 sind weitere Farbstoffe der allgemeinen Formel XIII mit X = CN angeführt. Die Farbstoffe sind gelb.

(Siehe Tabelle 8 Seite 30 f.)

Tabelle 8

| $R^6$ | $R^2$ | M |
|---|---|---|
| 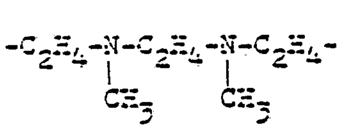 | 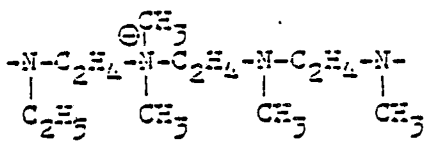 | -O- |
| " | 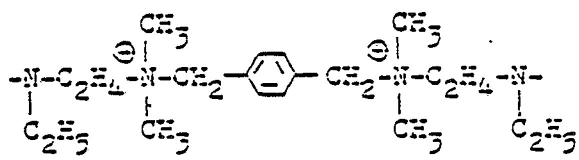 | " |
| $-C_2H_4-$ | 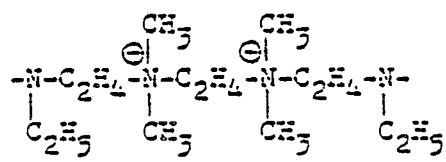 | " |
| $-C_3H_6-$ | 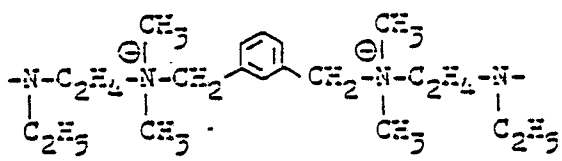 | " |
| " | " | -NH- |
| " | " | 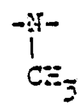 |
| 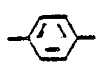 | " | 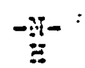 |
| " | " | -O- |
| 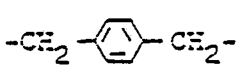 | 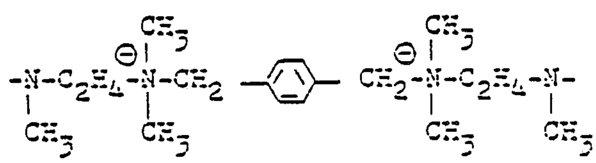 | " |
| " | " | -NH- |
| 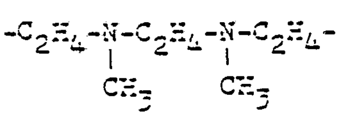 | 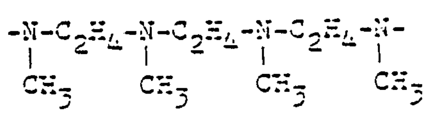 | -O- |

Ebenfalls von besonderer Bedeutung sind Verbindungen der Formel XIV

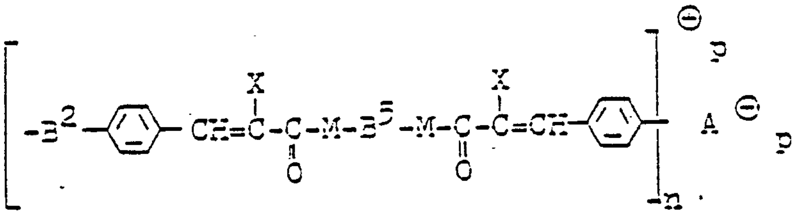 (XIV)

wobei X, M, $B^2$, n, p und $A^\ominus$ die angegebene Bedeutung haben und die Reste M und X gleich oder verschieden sein können und $B^5$ ein Brückenglied im Rahmen der Definition für $B^1$ bedeutet, das mindestens eine positive Ladung trägt.

Bevorzugte Reste sind z. B. für $B^2$:

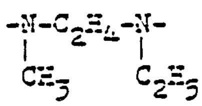 , 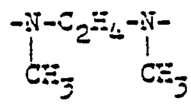 , 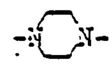 , 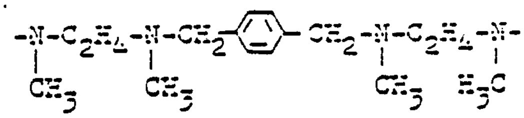

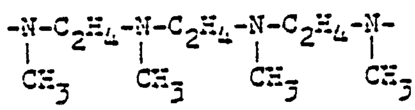 , 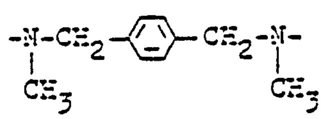 oder

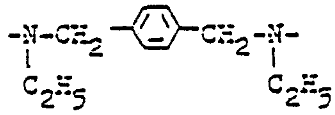

$B^5$: 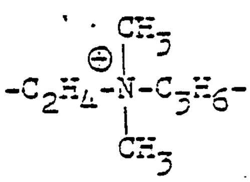 , 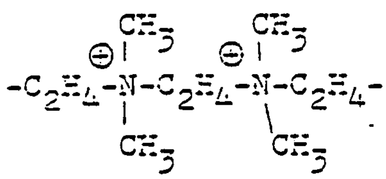 ,

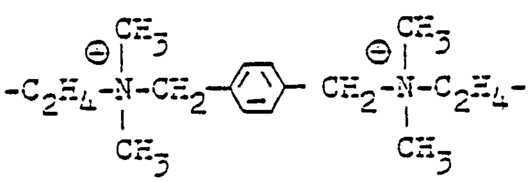 , 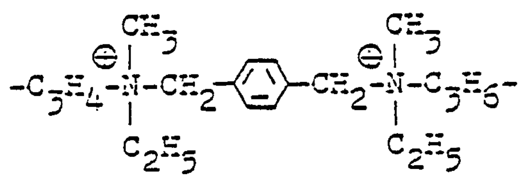 ,

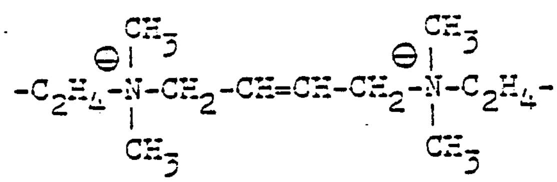 oder

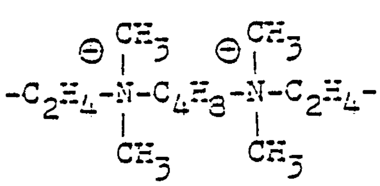

für M : Sauerstoff und für X : —CN.

Beispiel 8

Eine Mischung aus 17 Teilen Cyanessigsäure und 37 Teilen Acetanhydrid wird 1 h auf 70 °C erhitzt, auf 40 °C abgekühlt und mit 41 Teilen einer Verbindung der Formel

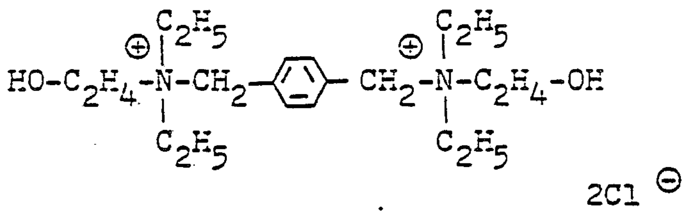

versetzt. Es wird 1 h bei 40 °C nachgerührt. Anschließend versetzt man das Reaktionsgemisch mit 28 Teilen Diphenylpiperazindialdehyd und erhitzt für 7 h auf 80 °C. Durch zugabe von 50 Teilen Eisessig erhält man die Flüssigeinstellung eines gelben Farbstoffs der Formel

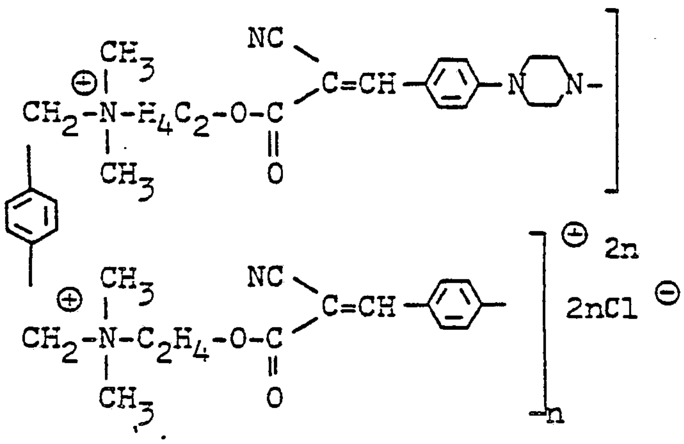

Der Farbstoff färbt gebleichte und ungebleichte Zellstoffe in gelben Tönen. Das Abwasser ist farblos bzw. schwach gefärbt.

In analoger Weise erhält man durch Umsetzung von Verbindungen der allgemeinen Formel

$$E-B^5-E$$

wobei E sowohl OH als auch $NH_2$ bedeuten kann und $B^1$ mindestens eine positive Ladung trägt mit gemischten Anhydren der Formel

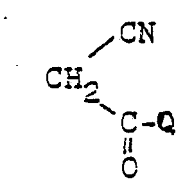

wobei Q den Rest einer organischen oder anorganischen Säure bedeutet, vorzugsweise der Essigsäure oder der Salzsäure, und anschließende Kondensation mit einem Dialdehyd der allgemeinen Formel

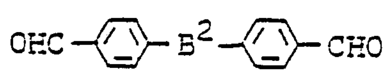

einen Farbstoff der allgemeinen Formel XIV.

In der folgenden Tabelle 9 sind weitere Farbstoffe der allgemeinen Formel XIV mit X = CN angeführt. Die Farbstoffe sind gelb.

(Siehe Tabelle 9 Seite 33 ff.)

Tabelle 9

| $B^3$ | $B^2$ | M |
|---|---|---|
| 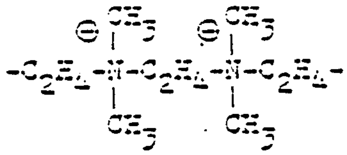 | 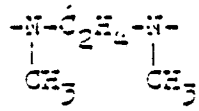 | -C- |
| 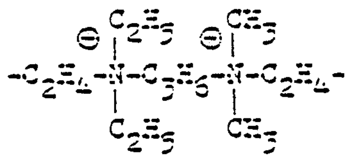 | 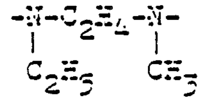 | " |
| 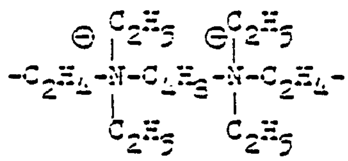 | 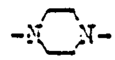 | " |
| 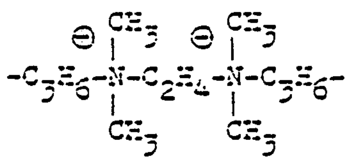 | " | " |
| 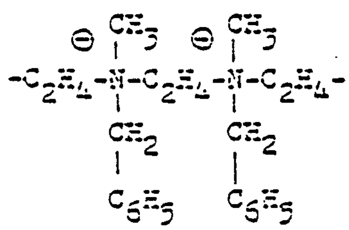 | " | " |
| 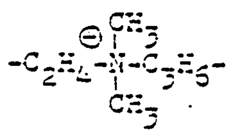 | 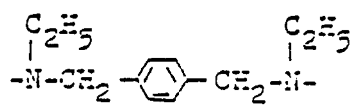 | " |
| 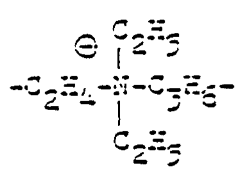 | 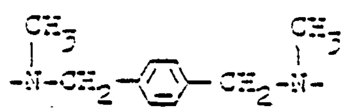 | -C- |
| 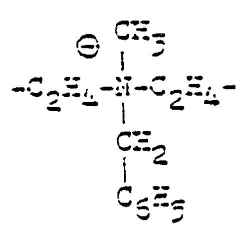 | 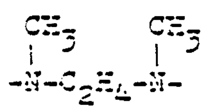 | " |
| 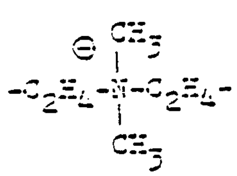 | 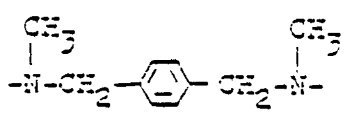 | " |

(Fortsetzung)

| $B^5$ | $B^2$ | M |
|---|---|---|
| 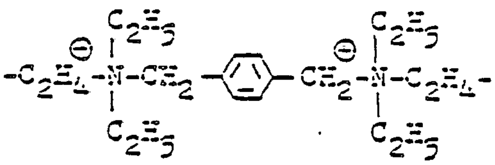 | 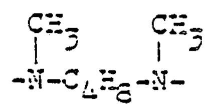 | " |
| 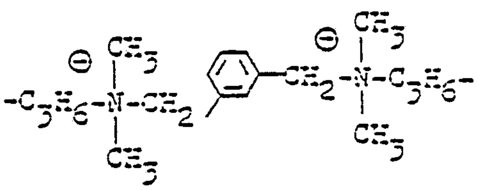 | 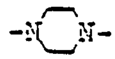 | " |
| " | 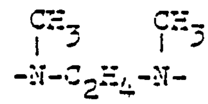 | 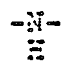 |
| " | 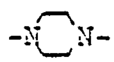 | " |
| 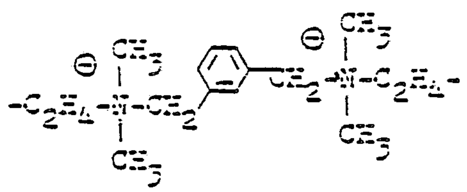 | 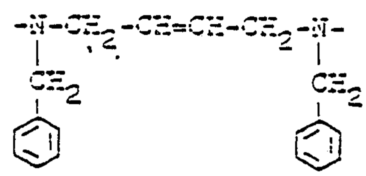 | -C- |
| 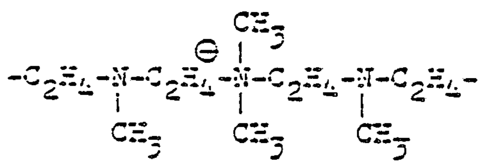 | 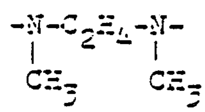 | " |
| 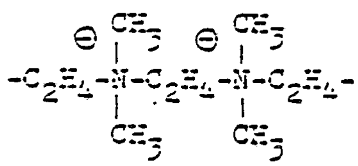 | 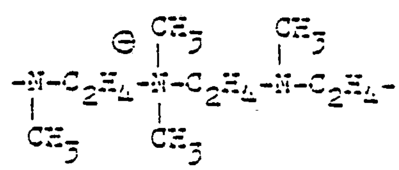 | " |
| " | 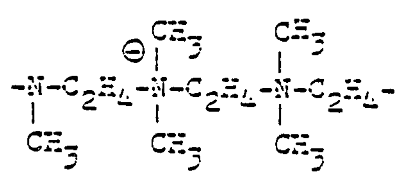 | " |
| " | 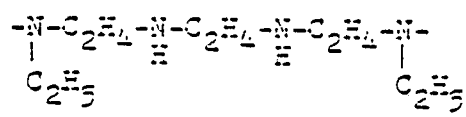 | " |

Beispiel 9

50 Teile einer Verbindung der Formel

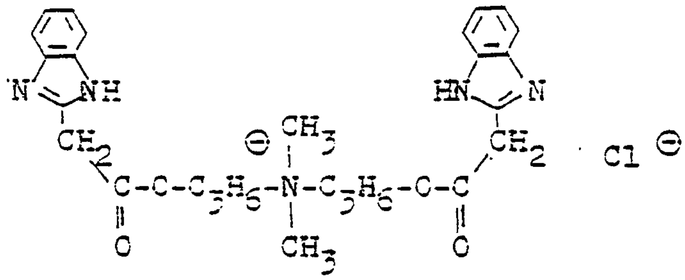

und 33 Teile eines Dialdehyds der Formel 8 werden in 50 ml Glykol auf 80 °C erhitzt, mit 2 ml Pyrrolidin versetzt und für 2 h bei 80 °C gehalten. Durch Zugabe von 100 ml Eisessig erhält man die Flüssigeinstellung eines gelben Farbstoffs der Formel

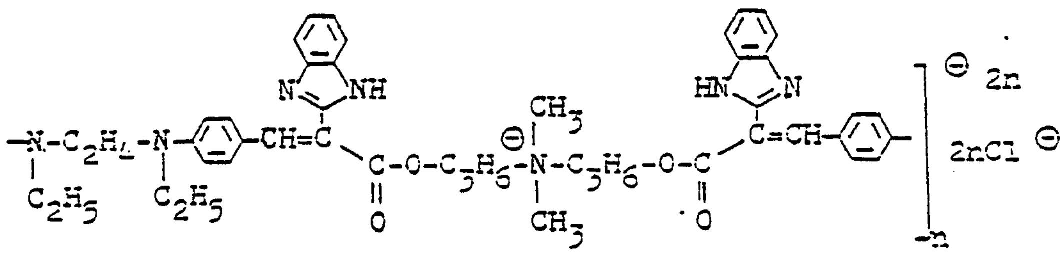

Der Farbstoff färbt Papier in gelben Tönen bei guten Abwasserwerten.
In analoger Weise erhält man durch Umsetzung von Verbindungen der allgemeinen Formel

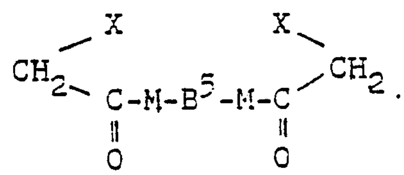

wobei X einen elektronenanziehenden Substituenten bedeutet, der von CN verschieden ist, mit einem Dialdehyd der allgemeinen Formel

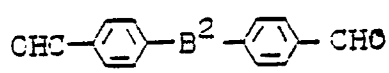

einen Farbstoff der allgemeinen Form XIV.

In der folgenden Tabelle 10 sind weitere Farbstoffe der allgemeinen Formel XIV angeführt. Die Farbstoffe sind gelb, sofern dies nicht anders erwähnt ist.

Tabelle 10

| $B^5$ | $B^2$ | X | M |
|---|---|---|---|
| 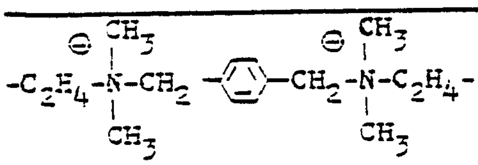 | 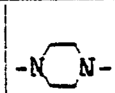 | 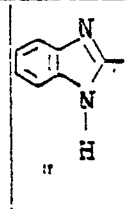 | O |
| " | 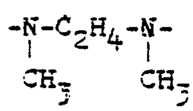 | " | " |
| " | 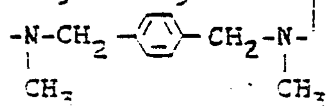 | " | " |
| " | " | 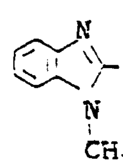 | " |

(Fortsetzung)

| $B^5$ | $B^2$ | X | M | Farbe |
|---|---|---|---|---|
| 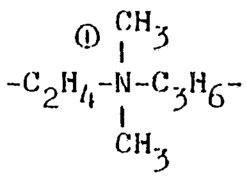 | 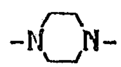 | 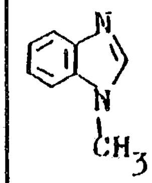 | O | |
| 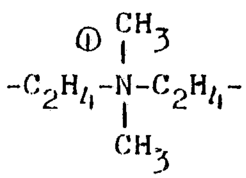 | 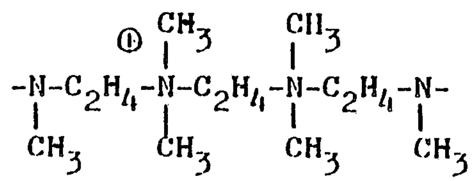 | " | " | |
| " | " | " | -NH- | |
| " | 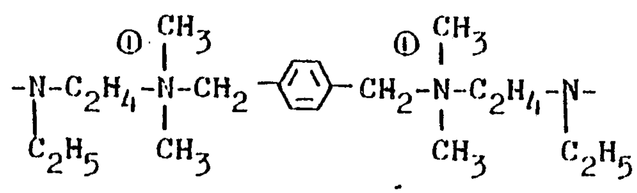 | " | O | |
| 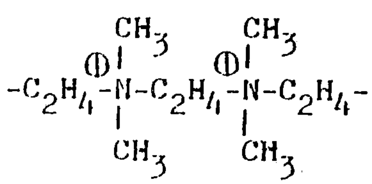 | " | 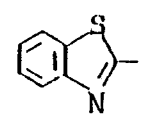 | " | orange |

(Fortsetzung)

| $B^5$ | $B^2$ | X | M | Farbe |
|---|---|---|---|---|
| 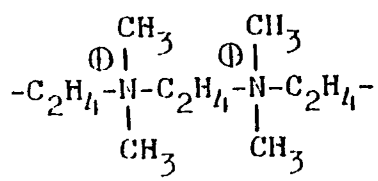 | 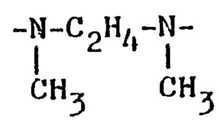 | 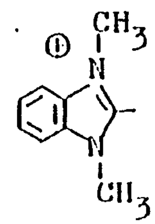 | O | gelb |
| " | 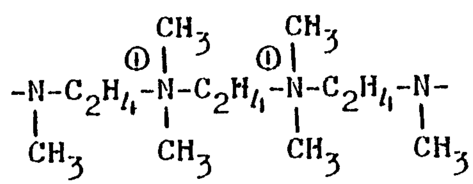 | 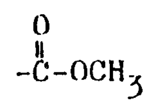 | " | " |
| " | " | 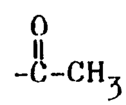 | " | " |
| " | " | " | -NH- | " |

**Patentansprüche**

1. Verwendung von oligo- oder polymeren Verbindungen der allgemeinen Formel I

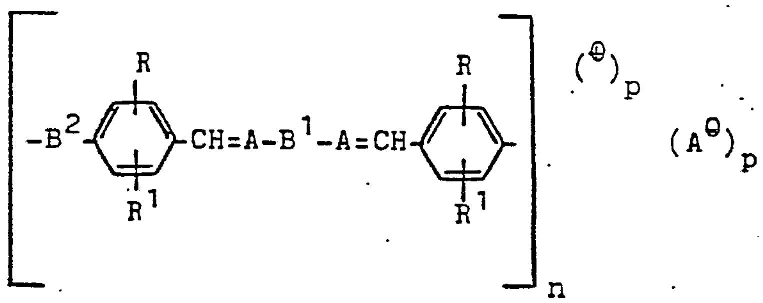

(I)

als substantive Farbstoffe zum Farben von ligninfreien Papierstoffen, wobei

A Den Rest eines methylenaktiven quaternierten Stickstoffheterocyclus oder eines methylenaktiven Malonsäurederivates,

$B^1$ ein Brückenglied,

$B^2$ eine direkte Bindung oder ein von einem Di- oder Polyamin abgeleitetes Brückenglied,

n eine Zahl > 1,

p die Zahl der positiven Ladungen,

R Wasserstoff, Chlor, Brom, Hydroxy, $C_1$- bis $C_8$-Alkyl, Nitro, $C_1$- bis $C_8$-Alkoxy, $C_1$- bis $C_8$-Alkoxycarbonyl, Cyan, Hydroxycarbonyl, gegebenenfalls substituiertes Carbamoyl, gegebenenfalls substituiertes Amino,

$R^1$ Wasserstoff Chlor, Hydroxy, $C_1$- bis $C_4$-Alkyl oder $C_1$ bis $C_4$-Alkoxy,

R und $R^1$ zusammen einen gegebenenfalls substituierten ankondensierten Ring oder R oder $R^1$ zusammen mit $B^2$ einen Heterocyclus und

$A^{\ominus}$ ein Anion bedeuten, wobei als Endgruppen Reste der Formeln

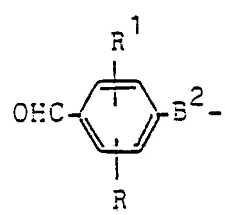

oder $-B^1-AH_2^{\oplus}A^{\ominus}$

fungieren, die gegebenenfalls noch weiter umgesetzt sein können.

2. Verfahren gemäß Anspruch 1, dadurch gekennzeichnet, daß man Verbindungen der allgemeinen Formel VIII

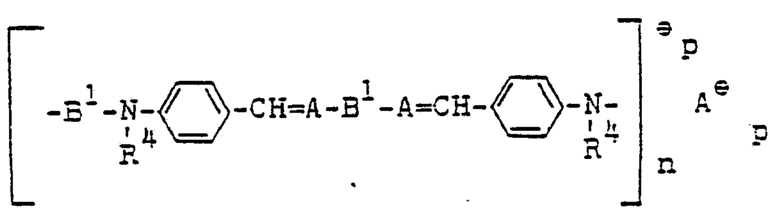

verwendet, in der A, $B^1$, n, p und $A^{\ominus}$ die für Formel I angegebene Bedeutung haben und $R^4$ $C_1$- bis $C_4$-Alkyl, β-Cyanäthyl, Cyanmethyl, β-Chloräthyl, β-Hydroxyäthyl, 2-Hydroxy-3-chlorpropyl- oder β-$C_1$- bis $C_4$-Alkoxyäthyl ist.

**Claims**

1. Use of an oligomeric or polymeric compound of the general formula I

(See formula 1 page 39)

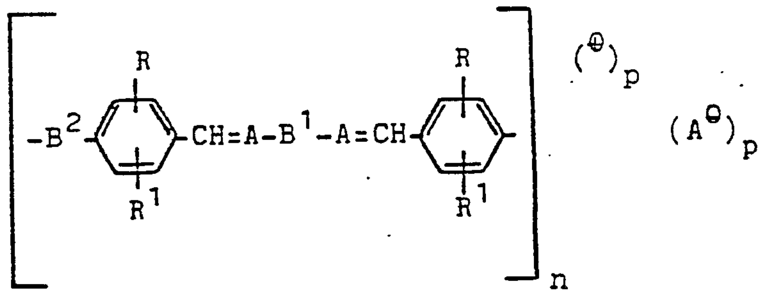

(I)

as a direct dye for coloring lignin-free paper stock, where

A is the radical of a methylene-active quaternized nitrogen heterocyclic or of an active methylene malonic acide derivative,

$B^1$ is a bridge member,

$B^2$ is a direct bond or a bridge member derived from a diamine or polyamine,

n is a number > 1,

p is the number of positive charges,

R is hydrogen, chlorine, bromine, hydroxyl, $C_1$-$C_8$-alkyl, nitro, $C_1$-$C_8$-alkoxy, $C_1$-$C_8$-alkoxycarbonyl, cyano, hydroxycarbonyl, unsubstituted or substituted carbamyl or unsubstituted or substituted amino,

$R^1$ is hydrogen, chlorine, hydroxyl, $C_1$-$C_4$-alkyl or $C_1$-$C_4$-alkoxy or

$R^1$ and $R^2$ together are an unsubstituted or substituted fused ring, or $R^1$ and $R^2$ together with $B^2$ are a heterocyclic radical and

$A^{\ominus}$ is an anion, the end groups comprising radicals of the formula

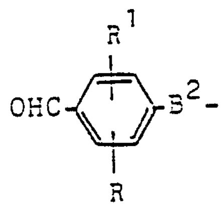

or $-B^1-AH_2^{\oplus}A^{\ominus}$

which may or may not have been reacted further.

2. A use as claimed in claim 1 of a compound of the general formula VIII

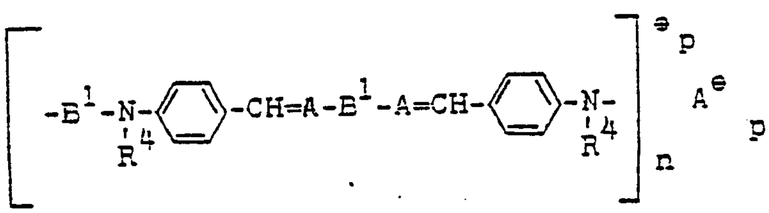

where A, $B^1$, n, p and $A^{\ominus}$ have the meanings stated for formula I and $R^4$ is $C_1$-$C_4$-alkyl,β-cyanoethyl,cyanomethyl, β-chloroethyl, β-hydroxyethyl, 2-hydroxy-3-chloropropyl or β-$C_1$-$C_4$-alkoxyethyl.

**Revendications**

1. Utilisation, à titre de colorants substantifs, de composés oligo- ou polymères répondant à la formule générale I

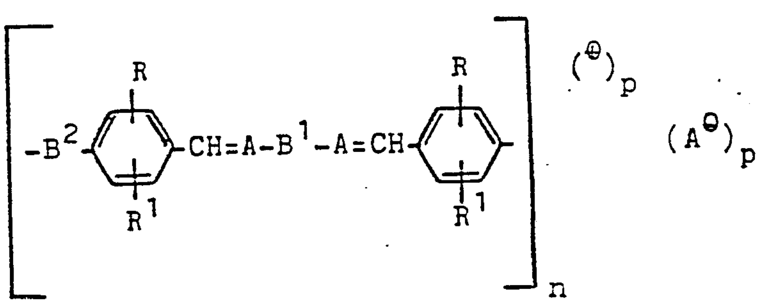

(I)

pour la teinture de pâtes à papier exemptes de lignine, formule dans laquelle

A représente le reste d'un hétérocycle azoté quaternisé, à activité méthylénique, ou d'un dérivé de l'acide malonique à activité méthylénique,

$B^1$ représente un élément de pontage,

$B^2$ représente une liaison directe ou un élément de pontage provenant d'une di- ou polyamine,

n représente un nombre supérieur à 1,

p représente le nombre des charges positives,

R représente un atome d'hydrogène, de chlore, de brome, un radical hydroxyle, alkyle en $C_1$ à $C_8$, nitro, alcoxy en $C_1$ à $C_8$, alcoxycarbonyle en $C_1$ à $C_8$, cyano, hydroxycarbonyle, carbamoyle éventuellement substitué, amino éventuellement substitué,

$R^1$ représente un atome d'hydrogène, de chlore, un radical hydroxyle, alkyle en $C_1$ à $C_4$ ou alcoxy en $C_1$ à $C_{14}$,

R et $R^1$ représentent ensemble un noyau condensé, éventuellement substitué, ou bien R et $R^1$ représentent, ensemble avec $B^2$, un hétérocycle et

$A^{\ominus}$ représente un anion,

où fonctionnent, à titre de radicaux terminaux, des restes de la formule

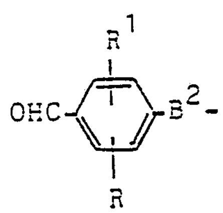

ou $-B^1-AH_2^{\oplus}A^{\ominus}$

qui peuvent encore avoir été davantage convertis.

2. Procédé suivant la revendication 1, caractérisé en ce que l'on utilise les composés de la formule générale VIII qui suit

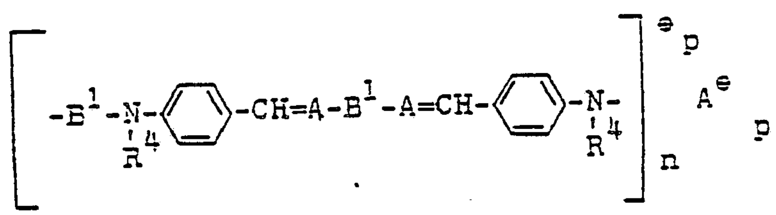

dans laquelle A, $B^1$, n, p et $A^{\ominus}$ possèdent les significations qui leur ont été attribuées à propos de la définition de la formule I et $R^4$ représente un radical alkyle en $C_1$ à $C_4$, β-cyanéthyle, cyanométhyle, β-chloréthyle, β-hydroxyéthyle, 2-hydroxy-3-chloropropyle ou β-alcoxy($C_1$ à $C_4$)-éthyle.